(19) Europäisches Patentamt
European Patent Office
Office européen des brevets

(11) **EP 2 386 668 A1**

(12) **EUROPÄISCHE PATENTANMELDUNG**

(43) Veröffentlichungstag:
**16.11.2011 Patentblatt 2011/46**

(51) Int Cl.:
*C23C 2/28* (2006.01)  *C23C 2/08* (2006.01)
*C23C 26/00* (2006.01)  *C23C 30/00* (2006.01)
*C22C 9/02* (2006.01)  *C23C 14/58* (2006.01)
*C25D 3/30* (2006.01)  *C25D 3/32* (2006.01)
*C25D 3/60* (2006.01)  *C25D 5/50* (2006.01)

(21) Anmeldenummer: **11003805.6**

(22) Anmeldetag: **10.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **12.05.2010  DE 102010020427**

(71) Anmelder: **KME Germany AG & Co. KG**
**49074 Osnabrück (DE)**

(72) Erfinder:
• **Hemschemeier, Hans-Jürgen**
  **49086 Osnabrück (DE)**
• **Klenen, Heinz**
  **49143 Bissendorf (DE)**
• **Krause, Andreas**
  **49078 Osnabrück (DE)**
• **Melcher, Walter**
  **49545 Tecklenburg (DE)**
• **Rode, Dirk**
  **49088 Osnabrück (DE)**

(54) **Produkt mit einer antimikrobiell wirkenden Oberflaechenschicht und Verfahren zu seiner Herstellung**

(57) Produkt mit einer Oberflächenschicht aus einer antimikrobiellen, silberfarbenen Legierung auf Basis von Kupfer und Zinn, mit folgenden Merkmalen:
- Die Oberflächenschicht befindet sich auf einem Kupferemittenten, der aus Kupfer oder einer Kupfer-Legierung besteht, wobei Kupfer aus dem Kupferemittenten durch Diffusion in die Oberflächenschicht eingelagert ist
- Die Oberflächenschicht auf Basis einer Kupfer-Zinn-Legierung weist wenigstens eine bei Raumtemperatur stabile intermetallische Phase aus Kupfer und Zinn auf;
- Die Oberflächenschicht besteht an der dem Kupferemittenten abgewandten Oberfläche überwiegend oder vollständig aus einer der folgenden intermetallischen Phasen:

- ETA-Phase (Cu6Sn5) mit 40 Gew.-% Kupfer in dieser Phase
- EPSILON-Phase (Cu3Sn) mit 61 Gew.-% Kupfer in dieser Phase
- DELTA-Phase (Cu41Sn11) mit 67 Gew.-% Kupfer in dieser Phase

wobei herstellungsbedingte Abweichungen der Kupfer-Konzentration an der Oberfläche in einem Bereich von maximal +/- 5 Gew.-% Kupfer liegen.
Das Produkt wird durch eine die Diffusion auslösende Wärmebehandlung hergestellt.

**EP 2 386 668 A1**

**Beschreibung**

Die Erfindung betrifft ein Produkt mit einer antimikrobiellen Oberflächenschicht und ein Verfahren zu seiner Herstellung.

Es ist bekannt, dass einige Metalle eine (mitunter nur schwache) schädigende Wirkung auf unterschiedliche Krankheitserreger zeigen, zu denen Bakterien, Viren und Pilze zählen.

Der Begriff der Oligodynamie wurde von Nägeli 1893 eingeführt für die wachstumshemmende oder abtötende Wirkung von Schwermetallspuren auf Mikroorganismen (z.B. von Kupferspuren auf Algen, von Silber auf Schimmelpilze, Algen, Bakterien).

Dieser keimtötende Effekt stellt sich bereits bei sehr geringen Konzentrationen der oligodynamisch wirkenden Metalle in wässrigen Lösungen ein, er kann daher gut zur Desinfektion und Konservierung von Flüssigkeiten, besonders zur Entkeimung von Trink-, Bade- und Brauchwasser ausgenutzt. Die sich aufgrund des Lösungsdrucks der Metalle einstellende Konzentration entspricht ungefähr der Verdünnung D9 in der Homöopathie.

Oligodynamisch wirksam sind Silber, Kupfer und Messing. Ihre wachstumshemmende und abtötende Wirkung auf bakterielle Keime erfolgt im ppb-Konzentrationsbereich, (Quelle 1.1), (Quelle 1.2), (Quelle 1.3). Andere Quellen geben an, dass auch die Kupferlegierung Bronze und Zinn eine oligodynamische Wirksamkeit besitzen, die allerdings geringer ist als die von Kupfer und Silber, (z.B. Quelle 1.4, Quelle 1.3).

Die Metalle zeigen diese oligodynamische Wirkung jedoch erst, sofern sie als Metall-Ionen in den oben genannten geringen Konzentrationen in wässriger Lösung vorliegen (Quelle 1.2, Quelle 1.3, Quelle 1.5).

Die oligodynamische Wirksamkeit eines Metalls bezieht sich - wie oben dargestellt - auf spezielle Zustände bzw. Anwendungsfälle, die Kenntnis dieser Wirksamkeit ist qualitativ jedoch nicht quantitativ. Die genaue Stärke dieser oligodynamischen Wirksamkeit ist nicht quantitativ festgemacht, d.h. es geht aus dieser Bezeichnung nicht hervor, wie schnell eine bestimmte Anzahl von Mikroben abgetötet wird. Je nach Untersuchungsbedingungen und Mikrobenart gibt es daher auch unterschiedliche Reihenfolgen für die oligodynamische Wirksamkeit verschiedener Metalle. Hierbei spielt eine wichtige Rolle, in welcher Form die Metalle vorliegen: in gelöster Form in Flüssigkeiten oder in Ionenform in Salzen oder als Reinmetall oder Legierung.

Für Silber wird zwar allgemein eine gute oligodynamische Wirksamkeit angegeben, zur Desinfektion von Wasser werden jedoch in Abhängigkeit von der Konzentration Einwirkzeiten zwischen einer und 20 Stunden angegeben. Silber wird dabei häufig in Form von Ionen als Silbersalze (z.B. Silberchlorid, Natrium-Silberchlorid, Silbersulfat) dem Wasser zugegeben, es kann jedoch auch auf elektrolytischem Wege durch Auflösung einer Ag-haltigen Anode unter Stromeinwirkung in Lösung gebracht werden (Quelle 1.2, Quelle 1.3).

Eine genauere quantitative Beschreibung der antimikrobiellen Wirkung ermöglicht der Test auf antimikrobielle Aktivität gemäß ISO 22196 (Quelle 1.6), nach dem eine Substanz nur dann als "antimikrobiell" eingestuft wird, wenn bestimmte Kriterien eingehalten werden, es muss z.B. eine definierte Anzahl von Bakterien unter definierten Testbedingungen innerhalb einer definierten Zeit um eine definierte Anzahl abnehmen im Vergleich zu einem neutralen Testmaterial. Als Testmaterial wird ein Festkörper verwendet, auf dem Mikroorganismen aufgebracht werden. Dieser Test wird verwendet, um die antimikrobielle Wirkung von Metallen und Legierungen eindeutig zu beschreiben.

Nach Vorgaben der EPA (U.S. Environmental Protection Agency) gilt eine Kupferlegierung als antimikrobiell, wenn sie innerhalb von 2 Stunden 99,9 % der Bakterien abtötet (Quelle 1.7).

In der Literatur veröffentlichte Testergebnisse und eigene Messungen zeigen, dass diese Kriterien wesentlich schärfer sind als die unscharfe Angabe einer oligodynamischen Wirksamkeit. Dies wird im Folgenden erläutert:

Die Schnelligkeit, mit der Mikroben auf Cu-haltigen Oberflächen absterben, hängt u.a. von dem Kupfergehalt ab, der an der Oberfläche eines Cu-Werkstoffes vorliegt.

Messungen nach dem Testverfahren ISO 22196 zeigen, dass Mikroben auf technisch reinem oder niedrig legiertem Kupfer (z.B. DHP-Cu) innerhalb von wenigen Minuten absterben, Kupferoberflächen sind damit nicht nur "antimikrobiell" gemäß EPA-Vorgaben, sondern übertreffen die geforderte Wirksamkeit noch.

Auf Messing mit nur 70% Cu-Gehalt verlängert sich die Zeit schon deutlich gegenüber Kupfer, Messing ist jedoch ebenfalls deutlich "antimikrobiell" (Quelle 1.7).

Über die antimikrobielle Wirksamkeit von Kupfer in Kupferlegierungen gemäß der EPA-Anforderungen gibt es in der Fachliteratur verschiedene Angaben:

- Auf Kupferlegierungsoberflächen mit einem Kupfergehalt von 65% Cu oder mehr werden 99,9 % der Bakterien innerhalb einer Expositionszeit von 2 h eliminiert (Quelle 1.8).
- Die bei der CDA (Copper Development Association) veröffentlichte Liste von Kupferlegierungen, die bei der EPA (U.S. Environmental Protection Agency) als antimikrobiell registriert sind, umfasst Kupferlegierungen mit mindestens 60% Kupfer, Angabe in Gewichtsprozent, (Quelle 1.9).

Kupferlegierungen mit geringeren Cu-Gehalten als 60% Cu sind nicht als "antimikrobiell" gemäß EPA-Vorgaben registriert. Die antimikrobielle Wirksamkeit nimmt häufig mit abnehmendem Cu-Gehalt ab. Diese Tendenz zeigen die oben aufgeführten Quellen.

Allerdings gibt es auch Ausnahmen von diesem öfters beobachteten Trend, da offenbar auch die Art der Legierungselemente und die Testbedingungen einen Einfluss haben (Quelle 1.10).

Bei eigenen Messungen an Legierungen mit deutlich geringeren Cu-Gehalten als 60% Cu wurde eine ungenügende antimikrobielle Wirksamkeit festgestellt, so dass diese Legierungen nicht "antimikrobiell" gemäß EPA-Definition waren, obwohl das darin enthaltene Kupfer grundsätzlich eine oligodynamische Wirksamkeit hatte. Die Wirksamkeit war jedoch soweit abgeschwächt, dass die Vorgaben der EPA nicht erfüllt werden konnten.

Die antimikrobielle Wirksamkeit von metallischem Zinn in technisch reinem Zustand wurde im Auftrag der Anmelderin von einem zertifizierten Prüflabor nach ISO 22196 ermittelt: Eine nennenswerte Verringerung der Bakterien wurde weder bei Escheria Coli noch bei Staphylcoccus aureus festgestellt. Zinn ist also "nicht antimikrobiell" gemäß der EPA-Vorgaben, obwohl es als oligodynamisch gilt.

Eine kupferhaltige Zinnlegierung mit einem Zusatz von einigen Prozenten des stark antimikrobiell wirkenden Elementes Kupfer als Legierungselement zu Zinn weist keine nennenswerte Verringerung der Bakterien im Test nach ISO22196 auf. Diese kupferhaltige Zinnlegierung ist also "nicht antimikrobiell" gemäß der EPA-Vorgaben, obwohl es die als oligodynamisch geltenden Legierungselemente Kupfer und Zinn enthält.

Über zinnhaltige Cu-Legierungen ist bekannt:

- Die bei der EPA registrierten antimikrobiellen CuSn-Legierungen enthalten bis zu 13% Sn (Quelle 1.9). Der Kupfergehalt liegt damit unter Berücksichtigung der weiteren Legierungselemente im Bereich von >86% Cu.

- Die als antimikrobiell aufgeführte Cu-Legierung mit dem höchsten Sn-Gehalt ist die CuSn-Gusslegierung C90800 mit 11-13% Sn, der Kupfergehalt beträgt >86% Cu.

- Antimikrobielle Cu-Legierungen mit einem höheren Sn-Gehalt sind nicht registriert.

Der Cu-Gehalt dieser antimikrobiellen CuSn-Legierungen liegt in allen Fällen über 86% Cu, er ist damit im üblichen Rahmen von 60-100% Cu der registrierten antimikrobiellen Cu-Legierungen.

Silber wird zahlreichen Cu-Legierungen zur Verbesserung bestimmter mechanischer Eigenschaften zugesetzt. Zahlreiche Ag-haltige Cu-Legierungen wurden auf ihre antimikrobielle Eigenschaften hin überprüft und es ist aus der Fachliteratur bekannt:

- Die CuP-Legierungen C55280, C55281, C55282 enthalten von 1,8 - 5,2% Ag und sind bei der EPA als antimikrobiell registriert (Quelle 1.9).

- Die CuPAg-Legierungen C55284 und C55285 enthalten neben 5-6% Phosphor auch 14,5 -18% Ag und sind als antimikrobiell registriert (Quelle 1.9).

Der Cu-Gehalt dieser Legierungen liegt unter Berücksichtigung weiterer Legierungselemente in allen Fällen über 76% Cu. Er ist damit im üblichen Rahmen von 60-100% Cu der registrierten antimikrobiellen Cu-Legierungen. Für den Sn-Gehalt dieser Legierungen gibt es keine Vorgaben, Sn wird daher als zu vernachlässigende Verunreinigung angesehen oder kommt in den von der EPA registrierten Cu-Ag-Legierungen nicht vor. Die Ausbildung von intermetallischen Sn-Ag-Phasen, die im Rahmen der vorliegenden Erfindung wichtig sind, ist daher nicht möglich bzw. nicht vorgesehen.

Andere Untersuchungen (Quelle 1.10) zur antimikrobiellen Wirksamkeit von "Copper Silvers" beziehen sich nicht auf silberhaltige Kupferlegierungen, wie der Name vermuten lässt, sondern auf Neusilber-Legierungen aus Kupfer, Nickel und Zink, die im amerikanischen Sprachgebrauch wegen der silberfarbigen Oberfläche als "copper silver" bezeichnet werden. Die hieraus gewonnen Erkenntnisse sind wegen der unterschiedlichen Materialzusammensetzung nicht auf silberhaltige Kupferlegierungen übertragbar.

Untersuchungen mit Ag-Ionen-haltigen Beschichtungen zeigten, dass die antimikrobielle Wirksamkeit unter den hier verwendeten Testbedingungen ähnlich gering ist, wie die von Edelstahl, der als antimikrobiell unwirksam gilt, während Kupfer unter gleichen Bedingungen stark antimikrobiell wirkte (Quelle 1.11).

Die Oligodynamie des Silbers und die dazu veröffentlichten Untersuchungen und Schriften werden in (Quelle 1.3) ausführlich behandelt. Dabei werden Untersuchungsergebnisse erläutert, "dass reine Silberoberflächen ohne antimikrobielle Aktivität waren. Erst eine Oberflächenoxidation des Silbers mit einer oxidierenden Säure erzeugte eine antimikrobielle Aktivität. Dieser Befund entsprach den Ergebnissen von Doerr, der an mit Wasserstoff reduziertem Silber keine keimtötende Wirkung von Silber mehr feststellte" (Quelle 1.3).

Obwohl Silber also grundsätzlich eine oligodynamische Wirksamkeit nachgesagt wird, ist die antimikrobielle Wirkung von Ag jedoch je nach Anwendungsfall unterschiedlich und kann auch unbefriedigend sein. Die Anwesenheit von Silber ergibt nicht zwangsläufig eine gute antimikrobielle Wirksamkeit.

Die oligodynamische und antimikrobielle Wirkung von Metallen beruht darauf, dass diese in der Lage sind, Metall-Ionen an der Oberfläche zu bilden, die dann zum Absterben von Mikroben führen.

Die Fähigkeit, Ionen zu bilden, spielt auch beim Korrosionsverhalten und bei der Ausbildung von Anlaufschichten eine wichtige Rolle. Korrosionsprodukte und Anlaufschichten entstehen auf Metalloberflächen durch die Umwandlung von elektrisch neutralen Metallteilchen in Metall-Ionen unter dem von außen einwirkenden Einfluss der Umgebung, z.B. durch Oxidation der Oberfläche durch oxidierend wirkende Substanzen wie Luftsauerstoff, Feuchtigkeit, Handschweiß, Putzmitteln usw. Diese Metall-Ionen sind dann Bestandteil von Korrosionsprodukten und Anlaufschichten auf Metalloberflächen. Diese sind bei dekorativen, technischen oder architektonischen Anwendungen immer dann unerwünscht, wenn sie zu einer als negativ empfundenen Veränderung des optischen Eindruckes der Metalloberfläche führen, z.B. indem sie andersfarbige Flecken bilden, die Unsicherheit über die Reinheit der Oberfläche aufkommen lässt.

Kupfer und viele Kupferlegierungen neigen dazu, im Laufe der Zeit auf diese Weise Anlaufschichten zu bilden, die zu farblichen Veränderungen der Oberfläche führen. Die farbliche Veränderung ist in einigen Fällen durchaus erwünscht (z.B. bei grünen oder braunen Fassaden oder Dächern), in anderen Fällen ist sie jedoch unerwünscht. Die in den Anlaufschichten enthaltenen Cu-Ionen sind jedoch gleichzeitig die Ursache für die positiv bewertete hohe antimikrobielle Wirksamkeit dieser Oberflächen.

Die Forderung nach hoher antimikrobieller Wirksamkeit und nach gleichzeitig hoher Beständigkeit gegenüber Anlaufen und Korrosion können daher von vielen Kupfersorten und Kupferlegierungen nicht gleichzeitig befriedigend erfüllt werden, da die damit verbundenen Wirkmechanismen einander entgegenlaufen.

Es sind Kupferlegierungen mit silbriger Farbe bekannt, z.B. Kupfer-Nickel-Legierungen mit einem Ni-Gehalt von ca. 25% Ni und mehr (z.B. CuNi25, CuNi30) und Neusilberlegierungen (CuNiZn) mit unterschiedlichen Ni- und Zn-Gehalten.

Sie wirken antimikrobiell und kommen wegen ihrer gleichzeitig silbrigen Farbe als Ersatz für Edelstahl in Frage. Allerdings können sie aufgrund des Ni-Gehaltes bei Kontakt mit der Haut Allergie auslösend wirken.

Das Verzinnen von Kupferbändern oder Rohren ist Stand der Technik. Bänder aus Kupfer und Kupferlegierungen werden für verschiedene Anwendungen verzinnt:

- für Architekur-Anwendungen an Fassaden und Dächern,

- als Korrosionsschutz von Bändern für elektrische Anwendungen,

- als Kontaktmittel für elektrische Kontakte mit Steckverbindungen und Lötverbindungen.

Rohre werden an der Innen- oder Außenoberfläche für verschiedene Anwendungen verzinnt:

- Innenverzinnungen für verbesserte Korrosionsschutzwirkung bei korrodierend wirkenden Wässern,

- Außenverzinnungen für Lötanwendungen.

Es ist bekannt, dass Zinn und Kupfer verschiedene intermetallische Phasen bilden, wenn verzinnte Kupferoberflächen einer Wärmebehandlung ausgesetzt werden. Diese Kupfer-Zinn-Phasen entstehen dadurch, dass Kupferatome in die Zinnschicht hinein diffundieren und Zinnatome in entgegengesetzter Richtung in das Kupfergrundmetall. Es können sich dabei gemäß des binären Cu-Sn-Zustandsdiagramms folgende Phasen bilden, die auch bei Raumtemperatur vorkommen:

- Zinn-Mischkristall mit 0% - 39 Gew.-% Cu

- ETA-Phase η, die chemische Zusammensetzung ist Cu6Sn5, der Kupferanteil beträgt 39% - 40% Gew.-% Cu bei Temperaturen ≤ 186 °C und 41% - 39 Gew.-% bei mehr als 186°C.

- EPSILON-Phase ε, die chemische Zusammensetzung ist Cu3Sn, der Kupfergehalt beträgt 61,6 Gew.-% Cu;

- DELTA-Phase δ, die chemische Zusammensetzung ist Cu41Sn11, der Kupfergehalt beträgt 66,6 Gew.-% Cu; die DELTA-Phase entsteht im Temperaturbereich von 350 °C - 590 °C, sie bleibt jedoch bei schneller Abkühlung auf Raumtemperatur auch bei Raumtemperatur erhalten.

- ALFA-Cu-Mischkristall, der Cu-Gehalt hängt von der Temperatur der Wärmebehandlung und der Abkühlzeit ab und beträgt ≥ 84 Gew.-% Cu.

Bei verzinnten Bändern aus der Kupferlegierung CuSn4 (Kupfer mit 4 Gew.-% Sn) mit rötlicher Farbe und CuSn8 mit goldener Farbe für elektrische Kontakte z.B. lassen sich die Reibungskräfte beim Zusammenstecken der Kontakte verringern, indem durch eine Wärmebehandlung zumindest ein Teil der Zinnschicht in die ETA-Phase Cu6Sn5 umgewandelt wird. Zur Herstellung werden Kupferbänder mit einer zinnhaltigen Diffusionsschicht versehen, wobei die Bänder anschließend diffusionsgeglüht werden, so dass sich ein Zinngehalt an der Oberfläche von ca. 8 % Sn einstellt. Der Kupfergehalt steigt gleichzeitig auf ca. 92 %. Die auf diese Weise an der Oberfläche erzeugte Metallstruktur ist eine homogene Alpha-Phase, die neben der goldenen Farbe als besondere Eigenschaft einen besonders geringen Reibungskoeffizienten besitzt. Dieses ist günstig für geringe Steckkräfte von Konnektoren. Die elektrische Leitfähigkeit ist wegen des reduzierten Sn-Gehalts deutlich besser als bei einem Bandwerkstoff, der zu 100 % aus CuSn8 besteht. Allerdings ist die Herstellung relativ aufwendig, da die Reduzierung des Sn-Gehalts in der Beschichtung von 100 % Sn auf ca. 8 % Sn lange Glühzeiten oder hohe Glühtemperaturen erforderlich machen. Gleiches gilt für Produkte wie beispielsweise Bedachungsmaterialien aus Kupfer, die eine spezifische Eigenschaft wie eine besondere Farbe aufweisen sollen.

Im Bereich des Sanitäts- und Krankenhauswesens wird bevorzugt Edelstahl eingesetzt. Edelstahl besitzt keine antimikrobiellen Eigenschaften. Mikroorganismen können sich daher auf Edelstahloberflächen ansiedeln und vermehren. Allerdings wäre es gerade im medizinischen Bereich wünschenswert, wenn die Vermehrung von Mikroorganismen unterdrückt werden könnte, was theoretisch durch den Ersatz von Edelstahl durch Kupferwerkstoffe möglich wäre. Reine Kupferwerkstoffe können jedoch anlaufen und ihre Farbe verändern, was nicht nur unschön aussieht, sondern auch Unsicherheit über die Reinheit der Oberflächen aufkommen lässt.

Silbrige oder weißliche Kupferlegierungen als Ersatz für Edelstahl wirken zwar antimikrobiell, weisen jedoch Nachteile auf, die auf weitere Legierungselemente zurückzuführen sind. Kupfer-Nickel-Legierungen (z.B. CuNi25, CuNi30) und Neusilberlegierungen (CuNiZn) mit unterschiedlichen Ni-Gehalten können aufgrund des Ni-Gehalts bei Kontakt mit der Haut Allergie auslösend wirken. CuMn-Legierungen mit erhöhten Mn-Gehalten (z. B. CuMn > 10 % Mn, wie z. B. CuMn20) neigen dazu, an der Luft oder mit Feuchtigkeit farblich anzulaufen und fest haftende braun-schwarze Beschichtungen und Flecken zu bilden, die schwarz-braune MnO-Verbindungen enthalten.

Es ist bekannt, dass Zinndiffusionsschichten auf einen Kupfersubstrat unterschiedliche Zusammensetzungen und Eigenschaften besitzen können, die sich aus dem Kupfer-Zinn-Zustandsdiagramm ergeben können. Auf einem CuSn4-Substrat mit einer verzinnten Oberfläche bildet sich nach Erfahrung der Anmelderin zumindest teilweise eine Eta-Phase Cu5Sn6 aus, über deren antimikrobielle Wirkungsweise nichts bekannt ist.

Kupfer mit Epsilon-Phase CuSn3 wurde hinsichtlich der Korrosionseigenschaften und der Kupferlöslichkeit seitens der Anmelderin untersucht. Es stellte sich heraus, dass die Oberfläche dieser Epsilon-Phase schon bei geringen Sauerstoffanteilen in der Glühofenatmosphäre schwarz-blaue Anlauffarben bildet, wobei über die antimikrobiellen Eigenschaften nichts bekannt ist.

Der Erfindung liegt die Aufgabe zugrunde, ein Produkt, insbesondere ein Kupfererzeugnis aufzuzeigen, welches eine ansprechende, silbrig-weißliche (silberfarben-metallische) Oberfläche aufweist, die ähnlich wie Edelstahl aussieht, gleichzeitig eine antimikrobielle Wirkung besitzt und zudem frei von Allergie auslösenden Nickel und zugleich frei von Flecken bildenden Mangan ist. Zudem soll ein Verfahren zur Herstellung eines solchen Produktes aufgezeigt werden.

Diese Aufgabe wird durch ein Produkt mit den Merkmalen des Patentanspruchs 1 gelöst.

Ein Verfahren zur Herstellung eines solchen Produktes ist Gegenstand des Patentanspruchs 10.

Die Unteransprüche betreffen vorteilhafte Weiterbildungen des Erdfindungsgedankens.

Gegenstand der Erfindung ist ein Produkt mit einer Oberflächenschicht aus einer antimikrobiellen, silberfarbenen Legierung auf Basis von Kupfer und Zinn, mit folgenden Merkmalen:

- Die Oberflächenschicht befindet sich auf einem Kupferemittenten, der aus Kupfer oder einer Kupfer-Legierung besteht, wobei Kupfer aus dem Kupferemittenten durch Diffusion in die Oberflächenschicht eingelagert ist;

- Die Oberflächenschicht auf Basis einer Kupfer-Zinn-Legierung weist wenigstens eine bei Raumtemperatur stabile intermetallische Phase aus Kupfer und Zinn auf;

- Die Oberflächenschicht besteht an der dem Kupferemittenten abgewandten Oberfläche überwiegend oder vollständig aus einer der folgenden intermetallischen Phasen:

- ETA-Phase (Cu6Sn5) mit 40 Gew.-% Kupfer in dieser Phase

- EPSILON-Phase (Cu3Sn) mit 61 Gew.-% Kupfer in dieser Phase

- DELTA-Phase (Cu41Sn11 ) mit 67 Gew.-% Kupfer in dieser Phase

wobei herstellungsbedingte Abweichungen der Kupfer-Konzentration in der jeweiligen Phase in einem Bereich von maximal +/- 5 Gew.-% Kupfer liegen.

Das erfindungsgemäße Produkt besitz eine metallische, antimikrobielle Oberflächenschicht auf Basis von Kupfer und Zinn, die auf oder an einem Kupferemittenten angeordnet ist. Das erfindungsgemäße Produkt besteht in bevorzugter Ausführungsform hauptsächlich aus einem Kupferemittenten, der dem Produkt die notwendige mechanische Festigkeit verleiht. Der Kupferemittent kann gleichzeitig eine tragende Funktion haben, wie z.B. bei einem Kupferrohr oder einem Kupferblech. Dann handelt es sich im wesentlichen um ein Kupfererzeugnis.

Der Kupferemittent kann allerdings auch auf seine Funktion als Lieferant für Kupferatome reduziert sein, so dass er nicht primär als Träger im mechanischem Sinne dient. Die tragende Funktion kann von einem tragenden Bauteil - dem Träger - übernommen werden, der aus einem anderen Werkstoff (z.B. Stahl) bestehen kann und in diesem Fall insbesondere eine größere Wanddicke aufweist als der Kupferemittent.

Dieser Kupferemittent ist mit einer metallischen, antimikrobiellen Oberflächenschicht auf Basis von Kupfer und Zinn versehen. Diese Oberflächenschicht besteht überwiegend, d.h. zu mehr als 50% aus Kupfer und Zinn. Vorzugsweise besteht sie ausschließlich aus intermetallischen CuSn-Phasen. Bevorzugt liegt nur eine der ETA, EPSILON oder DELTA CuSn-Phase vor. Es ist auch möglich dass zwei der genannten Phasen vorliegen. Der Anteil die beiden Phasen an der Oberfläche, die jeweils für sich genommen einen bestimmten Kupferanteil aufweisen, bestimmt die Kupferkonzentration an der Oberfläche. Diese Gesamtkonzentration an der Oberfläche, also nicht die Konzentration in den einzelnen intermetallischen CuSn-Phasen, kann herstellungsbedingt um +/- 5 Gew.-% Cu, abweichen. Das ist zumindest teilweise aus Dickenschwankungen der Oberflächenschicht zurückzuführen.

Wesentlich für die antimikrobielle Wirkung der Oberflächenschicht ist, dass der Kupferanteil an der Oberfläche hoch genug ist. Gleichzeitig darf der Kupfergehalt jedoch nicht so hoch sein, dass sich die Oberfläche unschön, das heißt dunkel, verfärbt. Der Kupfergehalt ist daher so gewählt, dass die Oberfläche silbrig-weiß ist.

Es hat sich gezeigt, dass dieses Ergebnis erreicht werden kann, wenn die Oberfläche überwiegend oder vollständig aus der ETA-Phase Cu6Sn5 oder alternativ einer der beiden weiteren in Patentanspruch 1 genannten Phasen besteht. Es wurde beobachtet, dass die Farbe silbrig-weißlich ist. Der Kupfergehalt dieser ETA-Phase beträgt ca. 40 Gew.-% Kupfer. Der Kupfergehalt liegt dabei unterhalb der von der CDA angegebenen Werte für antimikrobielle Kupferlegierungen.

Zwar besitzt Cu6Sn5 wegen des hohen Atomgewichts von Sn (Atomgewicht 118 Gramm) einen relativ geringen Gewichtsanteil von 40 % Kupfer. Das Atomverhältnis der Kupferatome beträgt jedoch 6/11 = 54,5 Atom-% Kupfer. Dieses Atomverhältnis ist ähnlich wie bei den meisten anderen hochlegierten antimikrobiellen Kupferlegierungen wie CuZn40, CuZn37, CuZn22Ni18, CuZn33Ni3, bei welchen wegen der ähnlichen Atomgewichte auch die Atomverhältnisse ähnlich wie die Gewichtsanteile sind. Diese Legierungen mit 60 Gew.-% Kupfer besitzen daher nahezu auch 60 Atom-% Kupfer. Die antimikrobielle Wirkung bei silbriger Farbe stellt sich daher auch dann ein, wenn die Oberfläche überwiegend oder vollständig aus zwei der genannten Phasen gebildet ist.

Das erfindungsgemäße Kupfererzeugnis kann neben der ETA-Phase insbesondere auch die EPSILON-Phase der Kupfer-Zinn-Legierung aufweisen. Diese stellt sich beim Diffusionsglühen des mit der Oberflächenschicht versehenen Kupferemittenten ein. Durch zunehmende Diffusion von Kupfer aus dem Kupferemittenten in die Oberflächenschicht kann die Zusammensetzung der Oberflächenschicht verändert werden. Der farbliche Eindruck ändert sich durch die EPSILON-Phase nur geringfügig. Die silbrig-weißliche Farbe bleibt erhalten, zumindest solange ein größerer Anteil der ETA-Phase und EPSILON-Phase weiterhin vorhanden ist. Die EPSILON-Phase besteht aus ca. 38 Gew.-% Zinn und 62 Gew.-% Kupfer. Die besagte Oberflächenschicht sollte an ihrer Oberfläche in der Summe zu mehr als 50% aus einer ETA-Phase Cu6Sn5 und aus einer EPSILON-Phase Cu3Sn bestehen.

Mit noch weiter gesteigertem Kupfergehalt wandeln sich die ETA- und EPSILON-Phasen teilweise noch in andere Phasen um, wobei sich die Farbe verändert und schließlich ins gold-gelbe übergeht.

Durch die Variation des Kupfergehalts können die mechanischen Eigenschaften der CuSn-Oberflächenschicht signifikant verändert werden. Diese können bei Beibehaltung der gewünschten silbrig-weißen Oberfläche weitgehend an die Erfordernisse des Endprodukts angepasst werden.

Zusätzlich können weitere Legierungselemente, insbesondere Silber, in der Oberflächenschicht enthalten sein. Der Anteil an Silber sollte zwischen 0,6 und 10 Gew.-% liegen. Vorzugsweise liegt er in einem Bereich von 2 bis 5 Gew.-%. Dabei soll Silber zumindest teilweise, vorzugsweise überwiegend, in Form von intermetallischen SnAg-Phasen vorliegen.

Mit der weiter unten beschriebenen erfindungsgemäßen Beschaffenheit einer metallischen Oberfläche eines Kupferemittenten gelingt es überraschenderweise, eine "antimikrobielle" Wirksamkeit gemäß EPA-Vorgaben zu erzielen, die in einem Bereich der Materialzusammensetzung liegt, der sich von den bereits registrierten Cu-Werkstoffen unterscheidet. Bei der erfindungsgemäßen Kombinationen der Legierungselemente Cu und Sn bzw. Cu, Sn und Ag in intermetallischen CuSn-Phasen bzw. intermetallischen SnAg-Phasen ergänzen sich diese auf positive Weise und ergeben eine besonders günstige Kombination von unerwartet guter antimikrobieller Wirksamkeit. Gleichzeitig kann eine gute Beständigkeit gegenüber Anlaufen und korrosivem Angriff gewährleistet werden. Zudem gelingt es, eine silbrige Oberfläche bereitzustellen, die frei von Nickel ist und damit nicht Allergie auslösend wirkt.

Als "silbrig" (im Sinne von silbrig-metallisch) wird dabei ein farblicher Eindruck der Oberfläche bezeichnet, der optisch ähnlich ist wie Edelstahl. Je nach der Bearbeitung der Oberfläche (matt, unterschiedlicher Glanzgrad, gebürstet usw.) und der chemischen Zusammensetzung sind jedoch farbliche Unterschiede möglich in Richtung eines silberartigen Eindruckes wie von Reinzinn oder Aluminium oder Chrom. Der silberartige Farbeindruck kann dann einen zusätzlichen leichten gelblichen oder bläulichen Schimmer annehmen.

Eine Zinnoxid-Modifikation $SnO_2$ mit weißer Farbe kann für die Ausbildung einer weißlichen, matten Oberfläche auf der CuSn-Oberflächenschicht positiv sein. Das heißt, die Mattheit nimmt zu, bzw. der Glanzgrad nimmt ab. $SnO_2$ bildet sich auf Sn oder Sn-Schmelze bereits bei Temperaturen oberhalb von 220 °C bei Gegenwart von Sauerstoff bzw. Luft. Der Zutritt von Luft bei der Diffusionsglühung muss daher nicht zwangsläufig nachteilig sein. Wichtig ist jedoch, dass die Zinnoxid-Modifikation SnO vermieden wird, da diese eine schwarz-blaue Farbe besitzt. Dieses kann sich z.B. in Gegenwart schwach reduzierender Gasgemische mit $H_2$ oder CO bilden, während $SnO_2$ zu SnO reduziert wird. Die Gasatmosphäre ist bei der Glühbehandlung zu kontrollieren und so einzustellen, dass die SnO-Bildung vermieden wird. Zudem soll sich keine geschlossene $SnO_2$-Schicht einstellen. Es ist vielmehr so, dass sich bevorzugt an den Korngrenzen Oxidanhaftungen ergeben, welche somit zu einer den Glanzgrad reduzierenden teilflächigen Bedeckung führen.

Alternativ kann unter einer sauerstofffreien Atmosphäre, insbesondere unter einem inerten Schutzgas wie z. B. $N_2$, wärmebehandelt werden.

Bei dem Produkt in Form eines Kupfererzeugnisses handelt es sich insbesondere um ein Kupferrohr, welches vorzugsweise an seiner Außenseite die besagte Oberflächenschicht aufweist. Es ist auch möglich, die Oberflächenschicht innenseitig aufzubringen, wobei bei der Innenanwendung die antimikrobielle Wirkung gegenüber der Farbe im Vordergrund steht.

Bei dem Kupfererzeugnis kann es sich auch um ein zumindest einseitig mit der besagten Oberflächenschicht versehenes bandförmiges Halbzeug handeln. Derartige Halbzeuge, unabhängig davon, ob es sich um Rohre oder um Bleche handelt, sind dafür vorgesehen, im Sanitär- oder Gesundheitswesen oder bei der Lebensmittelverarbeitung zur Anwendung zukommen, beispielsweise in Form von Oberflächen an einer einen Innenraum begrenzenden Wand-, Boden- oder Deckenfläche. Ein Beispiel hierfür sind Flächen an Türen. Hierzu zählen auch Griffflächen. Generell sollten Flächen, die von verschiedenen Menschen berührt werden, wie sämtliche Türgriffe, aber auch Griffe an Möbelstücken, medizinischen Geräten oder auch Griffbereiche eines Bettgestells, aus Werkstoffen mit antimikrobiell wirkenden Oberflächen bestehen.

Um dem Produkt ein silbrig-weißes Aussehen zu geben, reicht eine Oberflächenschicht mit einer Dicke von 1 $\mu$m bis 1,3 $\mu$m aus. Bevorzugt werden Schichtdicken bis 3 $\mu$m, vorzugsweise bis 5 $\mu$m, um genug Reserve bei einem eventuellem Abrieb zu haben.

Da es im Rahmen der Erfindung auf das optische Erscheinungsbild der Oberfläche ankommt, ist es nicht zwingend erforderlich, dass die Oberflächenschicht über die gesamte Dicke eine einheitliche Zusammensetzung aufweist. Es wird sich diffusionsbedingt ein Gefügegradient einstellen, so dass die Materialzusammensetzung an der sichtbaren Oberfläche der Oberflächenschicht von der Zusammensetzung in tiefer liegenden Bereichen der Oberflächenschicht abweicht. Dieser Gefügegradient stellt sich insbesondere durch die Diffusion von Kupferionen aus dem die Oberflächenschicht tragenden Kupferemittenten ein. Durch die Bildung der unterschiedlichen intermetallischen CuSn-Phasen mit definierten Kupferkonzentrationen gibt es in gewissen Zonen Sprünge in der Gesamtkupferkonzentration der Oberflächenschicht. Grundsätzlich gibt es jedoch einen diffusionsbedingten fließenden Übergang der Elementkonzentrationen von Kupfer und Zinn im Übergangsbereich zwischen der Oberflächenschicht und dem Kupferemittenten.

Das erfindungsgemäße Produkt kann nach einem Verfahren mit den Merkmalen des Patentanspruchs 11 hergestellt werden. Hierzu wird der Kupferemittent verzinnt und anschließend diffusionsgeglüht, wobei eine Zinndiffusionsschicht als Oberflächenschicht ausgebildet wird, welche an der dem Kupferemittenten abgewandten Oberfläche überwiegend oder vollständig aus wenigstens einer der folgenden bei Raumtemperatur stabilen intermetallischen CuSn-Phase besteht:

- ETA-Phase (Cu6Sn5) mit 40 Gew.-% Kupfer in dieser Phase
- EPSILON-Phase (Cu3Sn) mit 61 Gew.-% Kupfer in dieser Phase
- DELTA-Phase (Cu41Sn11) mit 67 Gew.-% Kupfer in dieser Phase

wobei herstellungsbedingte Abweichungen der Kupfer-Konzentration an der Oberfläche in einem Bereich von maximal +/- 5 Gew.-% Kupfer liegen.

Diese Zinndiffusionsschicht ist silbrig-weiß und wirkt antimikrobiell. Wie vorstehend erläutert, sollte ein Diffusionsglühen unter kontrollierten Bedingungen erfolgen, so dass sich keine unerwünschten Zinnoxide (SnO) bilden, da diese eine schwarz-blaue Farbe besitzen. Die Diffusionsbehandlung erfolgt daher unter Sauerstoffüberschuss oder alternativ in einer sauerstofffreien Schutzgasatmosphäre.

Das Diffusionsglühen kann zur Erhöhung des Kupferanteils in der Oberflächenschicht bei erhöhten Temperaturen oder bei längerer Dauer erfolgen. Hierzu kann die Temperatur auf über 150 °C, insbesondere auf über 250 °C angehoben werden.

Alternativ zum Verzinnen im Schmelztauchverfahren ist es möglich, das Produkt dadurch herzustellen, dass Kupfer und Zinn galvanisch auf dem Kupferemittenten abgeschieden werden. Es schließt sich dann eine Wärmebehandlung zur Diffusion von Kupfer in Oberflächenschicht an.

Alternativ wird vorgeschlagen, Kupfer und Zinn mittels physikalischer Gasphasenabscheidung (PVD) auf dem Kupferemittenten abzuscheiden. Wiederum schließt sich dann eine Wärmebehandlung zur Diffusion von Kupfer in Oberflächenschicht an. Die Eigenschaften dieser Oberflächenschicht wurden vorstehend erläutert.

Die künstlich hergestellten, silbrig-weißen, antimikrobiellen SnCu-Oberflächenschichten sollen bei Rohrprodukten vorzugsweise an der Außenseite liegen, um den optischen Vorteil der silbrig-weißlichen Farbe ausnutzen zu können als ansprechende Alternative zu Rohren aus Edelstahl, Aluminium oder solchen mit silberfarbenen Oberflächenschichten aus Chrom, Reinzink oder Zink. Zusätzlich ist es möglich, die werkseitig hergestellte antimikrobielle Oberflächenschicht auf der Rohrinnenseite auszubilden. Im Gegensatz zu den üblichen Innenverzinnungen, die das Austreten von Kupferionen in z. B. Trinkwasser verhindern sollen, wirkt diese Oberflächenschicht antimikrobiell. Theoretisch ist es auch denkbar, außenseitig antimikrobiell wirkende Kupferrohre herzustellen, die innen verzinnt sind, um den Austritt von Kupferionen zu verhindern.

Der Grundwerkstoff des Kupferemittenten, insbesondere der des den Kupferemittenten bildenden Trägers, ist insbesondere eine niedriglegierte Kupferlegierung mit einem Anteil der Legierungsbestandteile von max. 1 bis 3 Gew.-%, wobei der Anteil von Zinn als Legierungselement höher liegen und bis maximal 8 Gew.-% betragen kann. Der Kupferemittent besteht insbesondere aus desoxidiertem Kupfer. Kupfer ist zudem preiswerter als CuSn4, das relativ teures Zinn in bedeutendem Umfang enthält. Das gilt auch dann noch, wenn der Kupferemittent Kupfer und noch weitere preiswerte Legierungselemente in geringen Anteilen enthält, welche die Weiterverarbeitung nicht wesentlich verschlechtern, wie z. B. Zink. In jedem Fall handelt es sich bei dem Kupferemittenten um einen Werkstoff, der überwiegend aus Kupfer besteht und mit der antimikrobiellen Oberflächenschicht auf Basis von Kupfer und Zinn versehen ist.

Ein deutlicher Kostenvorteil zu CuSn4 bleibt auch dann bestehen, wenn nur ein geringer Zusatz von Zinn zu dem Kupferemittenten aus Kupferwerkstoff gegeben wird, z. B. um dadurch die Festigkeit des Endprodukts zu steigern, ohne dass gleichzeitig die Verarbeitbarkeit wesentlich verschlechtert wird. Dies ist zum Beispiel bei einem Kupferwerkstoff mit 0,2 % Zinn der Fall, anstelle von üblicherweise eingesetztem DHP-Kupfer.

Wesentlich zur Lösung des der Erfindung zugrunde liegenden, herstellungstechnischen Problems trägt bei, dass die Oberfläche eines Kupfergegenstandes in einem mehrstufigen Prozess gezielt verändert wird. Zunächst wird auf einem Kupferemittenten eine zinnreiche Oberflächenschicht abgeschieden, die vorzugsweise mehr als ca. 90% Zinngehalt aufweist. In einer anschließenden Wärmebehandlung wird die Oberfläche des Produktes und die Zusammensetzung der abgeschiedenen Oberflächenschicht umgewandelt, indem Zinnatome von der Oberflächenschicht in den Grundkörper hinein diffundieren und umgekehrt Kupferatome aus dem Kupferemittenten in die zinnreiche Oberflächenschicht.

Durch diesen Stoffaustausch entsteht eine neu strukturierte oberflächennahe Legierungsschicht, die mit einem fließenden Übergang intensiv mit dem Kupferemittenten verwachsen ist. Die so erzeugte Oberfläche ist unter den angegeben Bedingungen silberfarbig. Die Eigenschaften dieser Oberfläche unterscheiden sich zumindest optisch von den Eigenschaften des Kupferemittenten. Erst durch die Wärmbehandlung kann eine Oberflächenschicht geschaffen werden, welche silbrig und zugleich antimikrobiell ist. Die Prozessschritte des mehrstufigen Prozesses umfassen a) das Aufbringen der zinnreichen Oberflächenschicht, b) das Aufheizen des Produktes, c) die Wärmebehandlung zur Diffusion von Kupferatomen im Grenzbereich zwischen der Oberflächenschicht und des Kupferemittenten in Richtung zu Oberfläche der Oberflächenschicht, d) das definierte Abkühlen. Das Abkühlen sollte schnell erfolgen, z.B. mit Wasser. Dadurch kann die Gefügestruktur "eingefroren" werden. Zudem können unerwünschte Oberflächeneigenschaften, insbesondere bestimmte Anlauffarben, vermieden werden.

Die Beständigkeit derartiger Oberflächen gegen einen chemischen Angriff durch Flüssigkeiten, Luftfeuchtigkeit, Putzmittel und Handschweiß ist für eine anspruchsvolle dekorative Anwendung im Innenbereich bedeutsam. Bei Untersuchungen wurde festgestellt, dass die Beständigkeit gegenüber derartige Beanspruchungen nicht durch einfache lineare Beziehungen von den Gehalten an Kupfer oder Zinn abhängt.

Die Beständigkeit erreicht vielmehr dann bestimmte Optimalwerte, wenn die Legierungselemente Kupfer und Zinn an der Oberfläche in bestimmten stöchiometrischen Mengenverhältnissen stehen, die bestimmten intermetallischen Phasen des Cu-Sn-Zustandsdiagramms entsprechen.

Besonders günstig sind folgende Verhältnisse des Gewichtsanteils von Kupfer x(Cu) bezogen auf den Gewichtsanteil der Summe von Kupfer und Zinn x(Cu+Sn):

$$VC = x(Cu) / x(Cu+Sn)$$

- VC = 39...40% entsprechend der intermetallischen Phase Cu6Sn5,

- VC = 61,6% entsprechend der intermetallischen Phase Cu3Sn,

- VC = 66,6% entsprechend der intermetallischen Phase Cu41 Sn11.

Diese Oberflächen wurden im Test nach ISO 22196 mit den Bakterienstämmen Escheria Coli und Staphylokokkus Aureus auf ihre antimikrobielle Wirksamkeit hin überprüft: Sie sind oligodynamisch wirksam. Darüber hinaus erfüllen Sie jedoch auch die verschärften Forderung der EPA nach einer entsprechenden Verringerung der Keime innerhalb von 2 Stunden: sie sind antimikrobiell gemäß ISO 22196. Ihr Gehalt an dem antimikrobiell wirkenden Element Kupfer ist jedoch geringer als der Cu-Gehalt von Cu-Legierungen bzw. Cu-Sn-Legierungen, die als antimikrobiell bereits registriert sind. Diese erfindungsgemäßen Oberflächen besitzen außerdem eine gute Umformbarkeit und sie sind frei von Allergie auslösendem Nickel.

In einer Weiterbildung der Erfindung wird die antimikrobielle Wirkung der Cu-Sn-Oberflächen gesteigert, indem Silber in Kombination zu den Elementen Kupfer und Zinn eingesetzt wird, wobei dabei die Gehalte des antibakteriell wirkenden Elementes Kupfer zum Teil deutlich geringer sind als bei den bereits als antibakteriell registrierten Cu-Legierungen und Cu-Sn-Legierungen. Die antibakterielle Wirkung wird dabei nach dem Testverfahren ISO 22196 ermittelt. Hierdurch gelingt es, die bereits positiven Eigenschaften der erfindungsgemäßen Cu-Sn-Oberflächenschicht noch weiter zu steigern und eine insgesamt überraschend starke antimikrobielle Aktivität bei Legierungsschichten mit relativ geringem Cu-Anteil zu erzielen. Wie sich diese antimikrobielle Wirkung ergibt wird nachfolgend erläutert:

Es ist bekannt, dass eine keimtötende Wirkung erzeugt werden kann, indem reines Silber als Oberflächenmaterial verwendet wird. Alternativ hat es in jüngerer Zeit auch Versuche mit Silber-Partikeln in verschiedenen nichtmetallischen Einbettmassen gegeben, z.B. in Kunststoffen oder synthetischen Textilfasern.

Da Silber unter unterschiedlichen Testbedingungen auch unterschiedlich stark keimabtötend wirkt, wird hier ein Lösungsansatz verfolgt, bei dem Silber in Kombination zu Kupfer auftritt, um die keimtötende Wirkung von Kupfer in einem Cu-Sn-Verbund zu ergänzen.

Im Rahmen der Erfindung wird die keimtötende Wirkung von Cu-Sn-Schichten dadurch gesteigert, dass winzige antibakteriell wirkende Reinsilberpartikel (z.B. Ag-Nanoteilchen) auf der Oberfläche verankert werden. Bei der technischen Umsetzung ergeben sich allerdings Probleme, eine genügende Haftungsfestigkeit der Teilchen an der Oberfläche sicherzustellen. Nachteilig ist außerdem, dass bereits bei geringem Abrieb Oberflächenbereiche ohne Silberpartikel entstehen, da das Innere der Schicht frei von Silberpartikeln ist. Außerdem sind die Kosten von Ag-Pärtikeln relativ hoch.

Als Problemlösung wurde im Rahmen der Erfindung ein neuartiger Weg gewählt, der darauf beruht, dass anstelle von Reinsilber hier silberreiche, intermetallische Phasen aus den Elementen Sn und Ag zur Steigerung der antimikrobiellen Wirkung herangezogen werden können, deren Ag-Gehalt größer als 70 Gew.-% Ag ist.

In eigenen Untersuchungen wurden die Diffusionsvorgänge in Oberflächenschichten aus silberhaltigem Zinn auf einem Kupferemittenten untersucht, wenn diese Proben zuvor einer Wärmebehandlung unterzogen worden waren. Dabei wurde festgestellt, dass sich bei den Wärmebehandlungen die Zusammensetzung der Oberflächenschichten änderte und sich darin folgende silberhaltigen Phasen gebildet hatten:

- fein verteilte sehr Ag-reiche Ag-Sn-Phasen, die sich bei der Beobachtung unter dem Elektronenmikroskop aufgrund der Zusammensetzung und Struktur deutlich von der umgebenden CuSn-Matrix abheben. Die Zusammensetzung dieser separaten Phasen wurde über die Gewichtsverhältnisse der Elemente Ag und Sn bestimmt. Es handelte sich im Wesentlichen um die Phase Ag3Sn;

- die aus dem binären Cu-Sn-System bekannten Cu-Sn-Phasen, allerdings mit zusätzlichen geringen Anteilen von darin enthaltenem Silber, wobei dieses Silber in gleichmäßig verdünnter Form vorzuliegen scheint und auch bei starker Vergrößerung unter dem Elektronenmikroskop nicht als separate Ag-reiche Teilchen von der Cu-Sn-Matrix unterscheidbar ist.

Die Phasenausscheidungen, die in den durch Diffusion erzeugten Schichten aus Aghaltigem Zinn auf dem Kupferemittenten gebildet wurden, entsprechen damit den Phasen, die aus bereits bekannten metallkundlichen Untersuchungen zum 3-Phasen-Gleichgewichtssystem Cu-Ag-Sn bekannt sind.

Der Silbergehalt der Ag3Sn Phasen-Ausscheidungen beträgt ca. 73 Gew.-% Ag. Die Ag3Sn-Phasen sind bis zu einer Temperatur von ca. 480°C thermodynamisch stabil. Bei Temperaturen oberhalb von ca. 480°C wandeln sie sich in die Ag4Sn-Phase (ZETA-Ag, ξ-Ag) mit ca. 78 Gew.-% Ag um.

Nach Abschluss der Wärmebehandlungen wurden die Gefüge mit dem Elektronenmikroskop untersucht. Dabei stellte sich heraus, dass die Ag-reichen Ag-Sn-Phasen eine nur geringe Größe besitzen und nur unter dem Elektronenmikroskop erkennbar sind. Sie besitzen eine stark zerklüftete Form, die sich aus einzelnen Phasenbereichen zusammensetzt, die jeweils eine nur geringe Breite von ca. 2 - 30 μm besitzen. Die einzelnen Phasenbereiche ragen wie schmale Halbinsel in die umgebende Matrix hinein oder sind lokal netzartig dreidimensional als Inselketten miteinander verbundenen. Auf diese Weise ergeben sich relativ großräumige Gebilde von miteinander verbundenen Ag-Sn-Phasenausscheidungen, die in eine Cu-Sn-Matrix eingebettet sind. Sie sind wegen ihrer zerklüfteten Form über die gesamte Oberfläche verstreut. Schliffaufnahmen von den Schichten belegen außerdem, dass diese Ag-Sn-Phasen auch im Schichtinneren vorkommen.

Die Silbergehalte dieser Ag-Sn-Phasen betragen ≥ 73% Ag, sie sind damit so hoch, dass von ihnen eine deutliche antimikrobielle Wirkung ausgehen kann. Diese ist dann unter Testbedingungen nachweisbar, wenn die Ag-Sn-Phasen in genügend hoher Konzentration an der Oberfläche vorliegen.

Der für die antimikrobielle Wirksamkeit bedeutsame Flächenanteil dieser Ag-Sn-Phasen an der Oberfläche hängt vom Silbergehalt der Zinnschicht ab, die vor dem Beginn der Diffusionsglühung aufgebracht worden ist. Da ein Teil des Silbers außerdem nicht als Ag-Sn-Phasen vorhanden ist, sondern in den Cu-Sn-Phasen abgebunden zu sein scheint, ist der Zusammenhang zwischen Ag-Gehalt der anfänglichen Zinnschicht und der Konzentration der Ag-Sn-Teilchen nach der Wärmebehandlung kein linearer Zusammenhang.

Die Untersuchungen an Cu-Sn-Diffusionsschichten mit unterschiedlichen Ag-Zusätzen belegen, dass bei Ag-Gehalten von weniger als 0,6 Gew.-% Ag in der Cu-Sn-Ag-Legierungsschicht keine nennenswerte Steigerung der antimikrobiellen Wirksamkeit einer Ag-haltigen Cu-Sn-Diffusionsschicht möglich ist im Vergleich zu einer Ag-freien Schicht.

Andererseits ist ein Ag-Gehalt von mehr als 10 Gew.-% Ag in einer Cu-Sn-Ag-Oberflächenschicht bereits so hoch, dass eine weitere Steigerung keine nennenswerte Verbesserung mehr bewirkt, während die Kosten für das Vormaterial Silber gleichzeitig unangemessen stark ansteigen. Ein Optimum wird bei einem Ag-Gehalt von 3,5 ± 1,5 Gew.-% Ag an der Oberfläche gesehen.

Die bei den Untersuchungen erzielte gleichmäßig verteilte Ausscheidung von Ag-Sn-Phasen bei der Diffusionswärmebehandlung kann damit genutzt werden, die antimikrobielle Wirkung von CuSn-Diffusionsschichten zusätzlich deutlich zu erhöhen. Wegen der hohen antimikrobiellen Wirksamkeit der Ag-Sn-Phasen sind hierfür nur relativ geringe Ag-Gehalte in der aufzubringenden Zinnschicht notwendig, was einen sparsamen Umgang mit dem relativ wertvollen Metall Silber ermöglicht und gleichzeitig zu einer guten Wirtschaftlichkeit dieser Methode beiträgt.

Dieser hier erstmals dargestellte Mechanismus zur Erzeugung einer verbesserten antimikrobiellen Wirkung einer Cu-Sn-reichen Oberflächenschicht mit Hilfe von Feinverteilten Ag-Sn-Phasen bei gleichzeitiger guter Korrosionsbeständigkeit ist an die gleichzeitige Anwesenheit der Elemente Cu, Sn und Ag an der Oberfläche der Oberflächenschicht gebunden, wobei gleichzeitig die Elemente Sn und Ag untereinander sowie die Elemente Cu und Sn untereinander in bestimmten Mengenverhältnissen stehen müssen.

Für die durch Ag-Sn-Ausscheidungen verbesserten Cu-Sn-Oberflächenschichten ergeben sich auf Grund der Untersuchungen folgende vorteilhafte Konzentrationsbereiche für die Oberfläche:

0,6 - 10 Gew.-% Ag und der Rest ist Cu + Sn, wobei die Elemente Cu und Sn in folgenden Massenverhältnissen in den Cu-Sn-Phasen stehen:

$$Vs = (Masse\ Kupfer) / (Masse\ Kupfer + Zinn) = 0,4\ bzw.\ 0,616\ bzw.\ 0,666.$$

Entsprechend ist das Massenverhältnis Vs des Zinns

$$Vs = (Masse\ Zinn) / (Masse\ Kupfer + Zinn) = 0,334\ bzw.\ 0,384\ bzw.\ 0,60.$$

Bei den Untersuchungen an silberhaltigen Cu-Sn-Diffusionsschichten wurde die Beobachtung gemacht, dass Ag nicht nur in den bereits geschilderten diskreten Ag-Sn-Phasen vorkommt, die in eine Cu-Sn-Matrix eingebettet sind.

Ein Teil des Silbers kommt außerdem wie bereits erwähnt in scheinbar gleichmäßig verdünnter Form als Bestandteil der Cu-Sn-Matrix vor. Es wurde beobachtet, dass der Anteil des in verdünnter Form vorkommenden Silbers von den Glühtemperaturen und der Dauer der Wärmebehandlung abhängt. Bei Glühtemperaturen oberhalb von 550°C lassen sich die separaten Ag-reichen Ag-Sn-Phasen weitgehend auflösen und das Silber kann zum überwiegenden Teil in die verdünnte Form überführt werden. Auf diese Weise gelingt es, Materialproben gezielt so herzustellen, dass das Silber entweder überwiegend als separate hochkonzentrierte Ag-Sn-Phasen vorliegt, die an lokalen Einzelpunkten in eine Cu-Sn-Matrix eingebettet sind, oder aber in verdünnter Form gleichmäßig verteilt innerhalb der Cu-Sn-Matrix.

Die antimikrobielle Wirksamkeit dieser beiden Erscheinungsformen wurde gemessen. Es wurde dabei festgestellt:

Das Silber, welches in verdünnter Form innerhalb der Legierung vorliegt, leistet einen relativ geringen Beitrag zur Verbesserung der antimikrobiellen Wirksamkeit der erfindungsgemäßen Cu-Sn-Oberflächenschichten, es bewirkt aber grundsätzlich eine Verbesserung.

Das Silber, das dagegen in Form der hochkonzentrierten separaten Ag-Sn-Phasenausscheidungen innerhalb der Cu-Sn-Matrix und entsprechend auch an der Oberfläche vorliegt, verbessert die antimikrobielle Wirksamkeit der erfindungsgemäßen Cu-Sn-Oberflächenschicht deutlich erkennbar. Dieses in Form von Ag-Sn-Phasen vorhandene Silber ist dann deutlich wirksamer als das in verdünnter Form vorliegende Silber.

Eine ausreichend hohe Konzentration der Ag-reichen Ag-Sn-Phasen kann über den Ag-Gehalt der aufgebrachten Zinnschicht und über die Temperaturen der Wärmebehandlung eingestellt werden. Folgende Bedingungen müssen dazu vorliegen:

- 0,6 ... 10 % Ag an der Oberfläche,
- Temperatur der Wärmebehandlung < 520 °C.

Bei den als antimikrobiell registrierten Cu-Legierungen kommt Silber in verschiedenen Gehalten vor:

- als nicht näher spezifizierte "Verunreinigung" bei der überwiegenden Anzahl von Legierungen. Hierzu zählen auch die Cu-Sn-Legierungen mit erhöhtem Sn-Gehalt bis max. 13 Gew.-% Sn. Die Gehalte der "Verunreinigung" Silber liegen unterhalb von 0,5% Ag.

- Das Zinn-Massenverhältnis Vs dieser Cu-Sn-Legierungen liegt im Bereich von Vs $\leq$ 13%. Es ist damit deutlich unter den erfindungsgemäßen Werten. Intermetallische Cu-Sn-Phasen liegen bei diesen Werkstoffen nach dem Stand der Technik nicht oder gegebenenfalls nur in geringem Umfang vor, die Werkstoffe sind daher nicht mit den erfindungsgemäßen Oberflächenschichten vergleichbar. Bei diesen Cu-Sorten ist außerdem ein nennenswerter antimikrobieller Effekt, der durch Ag-Sn-Phasen wie oben beschrieben erzeugt wird, grundsätzlich nicht möglich, da die Gehalte an Ag zu gering sind und unterhalb der erfindungsgemäßen Bereiche liegen.

- als Legierungselement mit Ag-Gehalten von 0,1 ... 18 Gew.-% Ag. Keine dieser als antimikrobiell registrierte Legierung hat einen Ag-Gehalt im Konzentrationsintervall bis 10 Gew.-% Ag und gleichzeitig einen so hohen Sn-Gehalt, der im erfindungsgemäßen Bereich mit einem Zinn-Massen-Verhältnis Vs = 0,334 ... 0,60 entsprechend 33,4 ... 60 % Sn liegt, so dass sich in großem Umfang intermetallische Ag-Sn-Phasen und gleichzeitig intermetallische Cu-Sn-Phasen bilden. Der erfindungsgemäße Mechanismus der Verstärkung der antimikrobiellen Wirksamkeit von Cu-Sn-Phasen durch Silber, und insbesondere durch Ag-Sn-Phasen ist daher bei dieser Werkstoffgruppe nicht möglich.

Damit zeigt sich, dass die hier dargestellte Kombination von Legierungselementen eine bisher noch nicht als antimikrobiell registrierte Werkstoffzusammensetzung beschreibt.

Die Umformbarkeit dieser erfindungsgemäßen Oberflächenschichten wurde überprüft, indem Probekörper von 0,7mm Dicke mit einem Biegeradius von 5mm gebogen wurden. Die Haftung der Oberflächenschicht auf dem Untergrund war hervorragend, in keinem Fall kam es zu Abplatzungen. Die umgeformte Oberflächenschicht sah bei der Betrachtung mit dem bloßen Auge fehlerfrei aus. Die verformte Oberfläche wurde unter dem Elektronenstrahlmikroskop bei hoher Vergrößerung betrachtet, und dort wurden dann feine Risse in der verformten Oberfläche festgestellt.

Es ist überraschend, dass diese erfindungsgemäße Oberflächenschicht bei mikroskopischer Betrachtung als völlig rissfrei erscheint, obwohl sie tatsächlich im kleinsten Maßstab Risse besitzt. Obwohl diese Cu-Sn-Phasen offenbar als Reinstoffe eine ungenügende Dehnbarkeit für größere Umformungen besitzen, sind sie dennoch gut geeignet als Bestandteil einer Werkstoffkombination aus Cu-Grundmaterial und Cu-Sn-Oberflächenschicht, die auch für Umformungen bei architektonischen oder dekorativen Anwendungen mit anspruchsvollem optischem Erscheinungsbild einsetzbar sind.

Die Korrosionsbeständigkeit der Oberflächenschicht im unverformten und im verformten Zustand wurde in einem Korrosionstest mit künstlichem Handschweiß nach Norm DIN EN ISO 105-E04 untersucht. Dabei wurde eine sehr gute Korrosionsbeständigkeit festgestellt, die deutlich besser als die von Kupfer ist: die Proben blieben im unverformten und im verformten Zustand silbrig glänzend.

Mit einem Selbstentwickelten Prüfstand wurde die Anlaufbeständigkeit bei Gegenwart von wasserlöslichen Putzmitteln geprüft. Es zeigte sich, dass unter diesen Testbedingungen im Vergleich zu Kupfer die Fleckenbildung deutlich verringert war.

Die hier untersuchten Cu-Sn-Oberflächenschichten besitzen also die ungewöhnliche Eigenschaft, dass sie sowohl antimikrobiell wirksam sind als auch eine gute Beständigkeit gegen Korrosion und Fleckenbildung besitzen. Das gilt auch für den Fall, dass die Oberflächenschicht durch Anrisse bei einer Umformung beschädigt wurde. Dieses ist überraschend, da beide Mechanismen einander tendenziell entgegengesetzt wirken. Offensichtlich ist bei den hier untersuchten Cu-Sn-Oberflächenschichten gerade ein Optimum gefunden worden, bei dem gerade so viel Cu-Ionen freigesetzt werden, wie zur Aufrechterhaltung einer guten antimikrobiellen Wirksamkeit notwendig sind, ohne dass es gleichzeitig zur Bildung von problematischen Korrosionsprodukten oder Flecken aus Reaktionsprodukten mit diesen Cu-Ionen in einem unerwünschten Umfang kommt.

Die Untersuchung der verformten Proben zeigte, dass die oberflächlichen Risse nicht bis in das unlegierte Kupfergrundmaterial der Trägers (Kupferemittent) vorangeschritten waren, sondern vorher in Bereichen mit erhöhtem Zinngehalt endeten. Am Rissgrund lag damit ein gegenüber dem Grundmaterial soweit erhöhter Zinngehalt vor, dass die Korrosionsbeständigkeit dort gegenüber dem zinnarmen Kupferemittenten noch deutlich verbessert war und keine Korrosionsprodukte erkennbar waren.

Dieser Befund wird so interpretiert, dass der durch den Diffusionsprozess bewirkte tendenziell fließende Übergang der Konzentrationen und Eigenschaften das Fortschreiten der Risse aus der eher spröderen Oberflächenschicht in die duktileren tiefer liegenden Bereiche behindert hat, so dass das Grundmaterial des Trägers nicht von den Oberflächenrissen betroffen war.

Die gute Korrosionsbeständigkeit und Haftung wird damit als eine unmittelbare Folge des schichtigen Aufbaus der Oberflächenschicht mit tendenziell fließenden Übergängen der Konzentrationen von Zinn und Kupfer im Übergang von der Oberflächenschicht zum Grundmaterial des Trägers bzw. des Kupferemittenten gesehen, die sich aus der Wärmebehandlung ergeben.

Diese Untersuchungsergebnisse belegen zusammenfassend, dass die hier geschilderte erfindungsgemäße Oberflächenschicht sowohl eine gute antimikrobielle Aktivität als auch gleichzeitig eine gute Beständigkeit gegen Korrosion und Fleckenbildung bei guter Umformbarkeit ohne makroskopisch sichtbare Beeinträchtigungen des Erscheinungsbildes im umgeformten Bereich besitzt.

Bei den genaueren Untersuchungen an den erfindungsgemäßen Oberflächen wurden deutliche Unterschiede zwischen den Eigenschaften verschiedener Oberflächenzusammensetzungen festgestellt, die sich aus den unterschiedlichen Zusammensetzungen und den damit zusammenhängenden Eigenschaften ergeben. Es wurden damit einhergehend verschiedene Oberflächentypen identifiziert, deren unterschiedliche Eigenschaften vorteilhaft genutzt werden können.

Ausführungsbeispiele:

Variante 1A:

Cu-Sn mit vorrangig ETA-Phase mit ca. 40 Gew.-% Cu an der Oberfläche; ohne Silber

Ein Kupferemittent (z.B. ein Band, Hohlprofil oder Rohr aus Kupfer oder einer Kupferlegierung) wird mit einer zinnreichen Oberflächenschicht versehen. Dieses kann z.B. durch Feuerverzinnung in einem Zinnbad erfolgen, welches technisch reines Zinn enthält mit ggfs. geringen Zusätzen von Kupfer in der Größe bis zu 2% Cu.

Alternativ kann die Zinnschicht auch durch eine galvanische Verzinnung aufgebracht werden.

In einer anschließenden Wärmebehandlung bei Temperaturen unterhalb von 415°C werden die zinnreiche Oberflächenschicht so umgewandelt, dass dann eine neu strukturierte Oberfläche vorliegt, die im erfindungsgemäßen Regelfall der Variante 1A vollständig aus der intermetallischen Phase $Cu_6Sn_5$ (ETA-Phase $\eta$) besteht.

Bei leichten prozesstypischen Schwankungen können Abweichungen des Kupfergehaltes bis zu $\pm$ 5 Gew.-% Cu an der Oberfläche auftreten. Dann können lokal in entsprechend geringen Anteilen außerdem die Phasen $Cu_3Sn$ oder noch nicht umgesetzte Reinzinnreste vorliegen.

Unterhalb der oberflächennahen Schicht, die vollständig oder zumindest zum überwiegenden Anteil aus der ETA-Phase besteht, nimmt der Anteil des Zinns auf Grund der Diffusionswirkung tendenziell ab und der des Kupfers zu. Es finden sich dort Schichten bzw. Bereiche, in denen typische Phasenzusammensetzungen mit höherem Kupferanteil vorliegen. Unterhalb der ETA-Phase $Cu_6Sn_5$ (39...40 Gew.-% Cu) liegt die EPSILON-Phase $Cu_3Sn$ (ca. 61,6 Gew.-% Cu) und darunter ein Sn-reicher ALFA-Cu-Mischkristall mit ca. 2...12 Gew.-% Sn, 88...98 Gew.%-Cu.

Dieser durch die Wärmebehandlung erzeugte, schichtige Legierungsaufbau an der Oberfläche wird als Ursache für die gute Umformbarkeit und gleichzeitige gute Beständigkeit gegenüber Korrosion und Fleckenbildung angesehen.

Die Wärmebehandlung wurde bei Temperaturen von 150 ... 300°C durchgeführt, die Zeiten betrugen 2 min ... 120min; es ergaben sich Schichtdicken im Bereich von 1,3 ... 5 $\mu$m.

Die Oberfläche dieser Kombination unterschiedlicher Schichten / Phasen erscheint silberfarben und ähnelt im Erscheinungsbild einer Oberfläche aus Edelstahl oder Aluminium oder Neusilber oder CuNi30, der silbrige Farbton ähnelt den RAL-Grautönen RAL 7035, 7038, 7040, 7047 und 9006 bzw. den RAL-Metallic-Farben 110-M, 820-M, 170-M (Tabelle 4).

Die Zusammensetzung dieser erfindungsgemäßen Oberflächenschicht an der Oberfläche beträgt im Durchschnitt (Tabelle 1):

- Kupfer: 39...40 Gew.-% Cu mit prozessbedingter Abweichung von ±5 Gew.-% Cu,

- Zinn: 60... 61 Gew.-% Sn mit prozessbedingter Abweichung von ±5 Gew.-% Sn,

- Verunreinigungen und andere Legierungselemente, z.B. aus der Verzinnung oder aus dem Kupferemittenten werden so berücksichtigt, dass sie in Summe jeweils zur Hälfte den Massegehalten an Kupfer und Zinn zugerechnet werden. Die Gesamtheit dieser zusätzlichen Elemente übersteigt in Summe nicht den Gehalt von 3 % an der Oberfläche.

Die Massenverhältnisse von Kupfer und Zinn betragen (mit Berücksichtigung prozessbedingter Schwankungen der Zusammensetzung):

- Kupfer Vc = 0,39...0,40, mit verfahrensbedingter Abweichung von ± 0,05,
- Zinn Vs = 0,61...0,60, mit verfahrensbedingter Abweichung von ± 0,05. Obwohl der Gehalt des antimikrobiell wirkenden Elementes Kupfer in dieser erfindungsgemäßen Werkstoffzusammensetzung nur 39...40 Gew.-% Cu beträgt und damit deutlich unterhalb des Gehaltes von 60 Gew.-% Cu der bisher von der EPA registrierten antimikrobiellen Kupferlegierungen liegt, werden die Anforderungen der EPA an die antimikrobielle Aktivität überraschenderweise problemlos erfüllt.

Variante 1 B:

CuSn mit vorrangig ETA-Phase an der Oberfläche, mit Ag-Zusatz

Ein Kupferemittent (z.B. ein Band, Hohlprofil oder Rohr aus Kupfer oder einer Kupferlegierung) wird mit einer zinnreichen Oberflächenschicht versehen, die ca. 0,6 - 10 Gew.-% Ag besitzt. Dieses kann z.B. durch Feuerverzinnung in einem Zinnbad erfolgen, welches technisch reines Zinn enthält mit einem Zusatz von Silber in dem Konzentrationsbereich ca. 0,6 - 10 Gew.-% Ag, gegebenenfalls geringen Zusätzen von Kupfer in der Größe bis zu 2% Cu.

Alternativ kann die Zinnschicht mit einem Ag-Gehalt von 0,6 - 10 Gew.-% Ag auch durch eine galvanische Abscheidung aufgebracht werden.

Bei der Erstarrung der Ag-haltigen Zinnschmelze bei der Feuerverzinnung bilden sich Ag3Sn-Phasen in der Matrix der zinnreichen Oberflächenschicht aus.

Bei der anschließenden Wärmebehandlung werden die zinnreiche Oberflächenschicht und die Oberfläche des Kupferemittenten so umgewandelt, dass anschließend eine neu strukturierte Oberfläche vorliegt, bei der das dort vorhandene Kupfer mit Zinn im erfindungsgemäßen Regelfall der Variante 1B vollständig die intermetallischen Phase Cu6Sn5 (ETA-Phase η) gebildet hat. Daneben kommen in flächenmäßig deutlich geringerem Anteil fein verteilte Ag-Sn-Phasenausscheidungen vor, da der deutlich überwiegende Anteil des vorhandenen Silbers bei der erfindungsgemäßen Wärmebehandlung in Form der intermetallischen Phase Ag3Sn anfällt, die in die umgebende Matrix aus Cu-Sn-Phase eingebettet ist. Der Flächenanteil dieser Ag-haltigen Phasen beträgt 3 % bis ca. 25% je nach Ag-Gehalt der Ag-haltigen Zinnschicht.

Diese Ag-Sn-Ausscheidungen sind an der Oberfläche nur unter dem Elektronenmikroskop im Detail zu erkennen.

Im Falle einer galvanisch erzeugten Ag-haltigen Sn-Schicht bilden sich die Ag3Sn-Phasen - im Gegensatz zur Feuerverzinnung- erst während der Wärmebehandlung aus.

Die gesamte Oberfläche ist damit mit intermetallischer ETA-Phase Cu6Sn5 (η) und mit intermetallischen Ag-Sn-Phasen bedeckt.

Bei leichten prozesstypischen Schwankungen können Abweichungen des Kupfergehaltes bis zu ± 5 Gew.-% Cu an der Oberfläche auftreten. Es liegen dann zusätzlich geringe Anteile der noch nicht umgewandelten zinnreichen Phase oder der zinnärmeren intermetallischen EPSILON-Phase Cu3Sn vor.

Die Oberfläche dieser Variante 1B weist eine ähnlich gute Beständigkeit gegenüber Korrosion und Fleckenbildung auf wie die Variante 1A, außerdem ist die Umformbarkeit ähnlich. Der silbrige Farbton zeigt einen schwach gelblichen Schimmer und ähnelt den RAL-Grautönen RAL 7032, 7035, 7038, 7047 und 9006 bzw. den RAL-Metallic-Farben 120-M, 820-M, 860-M (Tabelle 5).

Die antimikrobielle Aktivität ist gegenüber Variante 1A deutlich verbessert, es ergibt sich eine schnellere Abnahme der Bakterienanzahl während des Testes auf antimikrobielle Aktivität.

Angabe der Zusammensetzungen an der Oberfläche von Variante 1 B für unterschiedliche Silbergehalte (Tabelle 2, Tabelle 3):

Es gelten die gleichen Massenverhältnisse von Kupfer und Zinn in den Cu-Sn-Phasen wie bei Variante 1A:

- Kupfer Vc = 0,39 ...0,40, mit verfahrensbedingter Abweichung von ± 0,05,
- Zinn Vs = 0,61...0,60, mit verfahrensbedingter Abweichung von ± 0,05.

a) Zusammensetzung für geringen Silbergehalt von 0,6 Gew.-% Ag:

- Verunreinigungen und andere Legierungselemente, z.B. aus der Verzinnung oder aus dem Kupferemittenten werden so berücksichtigt, dass sie in Summe jeweils zur Hälfte den Massegehalten an Kupfer und Zinn zugerechnet werden. Die Gesamtheit dieser zusätzlichen Elemente übersteigt in Summe nicht den Gehalt von 3 % an der Oberfläche.

- Zusammensetzung an der Oberfläche:

Kupfer = 39,7 Gew.-% Cu, mit prozessbedingter Abweichung von ±5 Gew.-% Cu,

Zinn = 59,7 Gew.-% Sn, mit prozessbedingter Abweichung von ±5 Gew.-% Sn,

Silber = 0,6 Gew.-% Ag

b) Zusammensetzung für bevorzugten Silbergehalt von 3,5 Gew.-% Ag:

- Verunreinigungen und andere Legierungselemente werden wie unter a) beschrieben berücksichtigt.

- Zusammensetzung an der Oberfläche:

Kupfer = 38,1 Gew.-% Cu, mit prozessbedingter Abweichung ±5 Gew.-% Cu,

Zinn = 58,4 Gew.-% Sn, mit prozessbedingter Abweichung ±5 Gew.-% Sn

Silber = 3,5 Gew.-% Ag

c) Zusammensetzung für relativ hohen Silbergehalt von 10 Gew.-% Ag:

- Verunreinigungen und andere Legierungselemente werden wie unter a) beschrieben berücksichtigt.

- Zusammensetzung an der Oberfläche:

Kupfer = 34,5 Gew.-% Cu, mit prozessbedingter Abweichung ±5 Gew.-% Cu,

Zinn = 55,5 Gew.-% Sn, mit prozessbedingter Abweichung ±5 Gew.-% Sn,

Silber = 10 Gew.-% Ag

Der Gehalt des antimikrobiell wirkenden Elementes Kupfer liegt bei dieser erfindungsgemäßen Werkstoffzusammensetzung je nach Silbergehalt im Bereich von 34,5 Gew.-% Cu ... 39,7 Gew.-% Cu, die verfahrensbedingten Abweichungen betragen ± 5 Gew.-% Cu.
Der Cu-Gehalt liegt damit unterhalb des Gehaltes von 60% Cu der bisher von der EPA registrierten antimikrobiellen Kupferlegierungen. Dennoch werden die Anforderungen der EPA an die antimikrobielle Aktivität überraschenderweise problemlos erfüllt.

Variante 2A:

Cu-Sn mit vorrangig EPSILON-Phase mit 61,6 Gew.-% Cu an der Oberfläche: ohne Silber
Ein Kupferemittent (z.B. ein Band, Hohlprofil oder Rohr aus Kupfer oder einer Kupferlegierung) wird mit einer zinnreichen Oberflächenschicht versehen, wie bei Variante 1A.
In einer anschließenden Wärmebehandlung werden die zinnreiche Oberflächenschicht und die Oberfläche des Kupferemittenten so umgewandelt, dass anschließend eine neu strukturierte Oberfläche vorliegt, die im erfindungsgemäßen Regelfall der Variante 2A vollständig aus der intermetallischen Phase Cu3Sn (EPSILON-Phase ε) besteht.
Die Wärmebehandlung unterscheidet sich von der der Variante 1A dadurch, dass höhere Temperaturen und/oder Zeiten erforderlich sind, um die angestrebte Umsetzung zu erzielen. Die EPSILON-Phase ist bei Temperaturen unterhalb von 677°C stabil. Die Wärmebehandlung wird daher zweckmäßigerweise bei Temperaturen bis maximal 670°C durchgeführt.

Bei leichten prozesstypischen Schwankungen können Abweichungen des Kupfergehaltes von -5 Gew.-% Cu bis + 2,5 Gew.-% Cu an der Oberfläche auftreten. Dann können in entsprechend geringen Anteilen je nach Temperatur und Zusammensetzung auch die intermetallischen Phasen ETA ($\eta$) oder DELTA ($\delta$) und/oder Alfa-Cu-Mischkristall-Phase vorliegen.

Durch die Wärmebehandlung entstehen Bereiche bzw. Schichten in der Nähe der Oberfläche, die in Abhängigkeit zum Abstand von der Oberfläche unterschiedliche Legierungszusammensetzung aufweisen.

Unterhalb der oberflächennahen Schicht, die vollständig (oder bei Prozessschwankungen zum deutlich überwiegenden Anteil) aus der EPSILON-Phase besteht, nimmt der Anteil des Zinns auf Grund der Diffusionswirkung tendenziell ab und der des Kupfers zu. Es finden sich dort Schichten bzw. Bereiche, in denen typische Phasenzusammensetzungen mit höherem Kupferanteil vorliegen: Unterhalb der EPSILON-Phase (ca. 61,6 Gew.-% Cu) liegt bei Glühtemperaturen unterhalb von 350°C ein Sn-reicher Alfa-Cu-Mischkristall mit ca. 88-98 Gew.%-Cu, ca. 2-12% Sn vor.

Bei Temperaturen von 350°C und mehr kann dagegen zwischen der EPSILON-Phase ($\epsilon$) und dem ALFA-Cu ($\alpha$) des Grundmetalls mit hohem Cu-Gehalt noch die DELTA-Phase ($\delta$) mit der Zusammensetzung Cu41Sn11 (66,6 Gew.-% Cu) angetroffen werden.

Die Wärmebehandlung wurde vorzugsweise bei Temperaturen von 300 ... 400°C durchgeführt, die Zeiten betrugen 60 min ... 15 min; es ergaben sich Schichtdicken im Bereich von 1,3 ... 5 $\mu$m.

Gegenüber der Variante 1A ist der erforderliche Zeit- und Energieaufwand für die Erwärmung auf höhere Temperaturen damit entsprechend größer.

Die Oberfläche dieser Kombination unterschiedlicher Schichten erscheint silberfarben und ähnelt im Erscheinungsbild einer Oberfläche aus Edelstahl oder Aluminium oder Neusilber oder CuNi30. Der silbrige Farbton ähnelt den RAL-Grautönen RAL 7035, 7038, 7040, 7047 und 9006 und den Metallic-Farbtönen RAL 110-M, 820-M, 180-M (s. Tabelle 4).

Eine Untersuchung der antibakteriellen Aktivität hat ergeben, dass die Abnahmerate, mit der sich die Bakterienanzahl im Test verringert, ist sogar größer als die der Variante 1A (Tabelle 4).

Die Umformbarkeit und Beständigkeit gegen Korrosion und Fleckenbildung ist ähnlich gut wie die der Oberflächenschichten der Variante 1A.

Die gute Beständigkeit gegenüber Korrosion und Fleckenbildung auch im verformten Zustand und die gute Haftung der oberflächlichen Legierungsschichten werden damit auch bei dieser Oberfläche als eine unmittelbare Folge des schichtigen Aufbaus der Oberflächenschicht mit tendenziell fließenden Übergängen der Konzentrationen von Zinn und Kupfer zwischen Oberflächenschicht und Kupferemittent gesehen, die sich aus der Wärmebehandlung ergeben.

Diese Untersuchungsergebnisse belegen zusammenfassend, dass die hier geschilderte erfindungsgemäße silberfarbige Ni-freie Oberfläche sowohl eine gute antimikrobielle Aktivität als auch gleichzeitig eine gute Beständigkeit gegen Korrosion und Fleckenbildung und eine gute Umformbarkeit ohne makroskopisch sichtbare Beeinträchtigungen des Erscheinungsbildes im umgeformten Bereich besitzt.

Die Zusammensetzung dieser erfindungsgemäßen Oberflächenschicht beträgt an der Oberfläche im Durchschnitt (siehe Tabelle 1):

- Kupfer: 61,6 Gew.-% Cu, mit prozessbedingter Abweichung von - 5 Gew.-% Cu bis + 2,5 Gew.-% Cu;

- Zinn: 38,4 Gew.-% Sn, mit prozessbedingter Abweichung von -2,5 Gew.-% Sn bis + 5 Gew.-% Sn.

Massenverhältnisse von Kupfer und Zinn an der Oberfläche mit Berücksichtigung verfahrensbedingter Schwankungen:

- Kupfer: Vc = 0,616, mit Abweichung von -0,05 bis +0,025,

- Zinn: Vs = 0,384, mit Abweichung von -0,025 bis +0,05.

Die Anforderungen der EPA an die antimikrobielle Aktivität wird problemlos erfüllt.

Die erfindungsgemäße Werkstoffzusammensetzung unterscheidet sich außerdem von den anderen bei der EPA registrierten Cu-Legierungen darin, dass das Kupfer als Cu-Sn-Phase vorliegt, was an dem hohen Zinn-Gehalt von 38,4 Gew.-% Sn erkennbar ist.

Bei anderen als antimikrobiell registrierten Cu-Sn-Legierungen sind die Sn-Gehalte deutlich geringer und betragen 13 % Sn oder weniger. Cu liegt dann als Sn-reicher Alfa-Cu-Mischkristall vor.

Variante 2B:

Cu-Sn mit vorrangig EPSILON-Phase an der Oberfläche, mit Zusatz von Silber

Ein Kupferemittent (z.B. ein Band, Hohlprofil oder Rohr aus Kupfer oder einer Kupferlegierung) wird mit einer zinnreichen Oberflächenschicht versehen, die 0,6 - 10 Gew.-% Ag besitzt. Diese Oberflächenschicht erfolgt wie bei Variante 1 B.

In einer anschließenden Wärmebehandlung werden die zinnreiche Oberflächenschicht und die Oberfläche des Kupferemittenten so umgewandelt, dass anschließend eine Oberfläche vorliegt, bei der das dort vorhandene Kupfer mit Zinn im erfindungsgemäßen Regelfall der Variante 2B vollständig die intermetallische Phase Cu3Sn (EPSILON-Phase ε) gebildet hat.

Daneben kommen in flächenmäßig deutlich geringerem Anteil fein verteilte Ag-Sn-Phasenausscheidungen vor, da der deutlich überwiegende Anteil des vorhandenen Silbers bei der erfindungsgemäßen Wärmebehandlung in Form der intermetallischen Phasen Ag3Sn oder Ag4Sn anfällt, die in die umgebende Matrix aus Cu-Sn-Phase eingebettet sind. Der Flächenanteil dieser Ag-haltigen Phasen beträgt 3 % bis ca. 25% je nach Ag-Gehalt der Ag-haltigen Zinnschicht.

Diese Ag-Sn-Ausscheidungen sind an der Oberfläche nur unter dem Elektronenmikroskop im Detail zu erkennen.

Es hängt von der Temperatur bei der Wärmebehandlung ab, in welcher Form die Ag-Sn-Phasen entstehen: Bei Temperaturen im Bereich von >480°C ... 677°C sind Ag3Sn-Phasen instabil und wandeln sich in Ag4Sn-Phasen (ZETA-Ag, ξ-Ag) um.

Die gesamte Oberfläche ist damit mit intermetallischer EPSILON-Phase Cu3Sn (ε) und mit intermetallischen Ag-Sn-Phasen bedeckt.

Bei leichten prozesstypischen Schwankungen können Abweichungen des Kupfergehaltes von -5 Gew.-% Cu bis + 2,5 Gew.-% Cu an der Oberfläche auftreten. Dann können in entsprechend geringen Anteilen je nach Temperatur und Zusammensetzung auch die intermetallischen Phasen ETA (η) oder DELTA (δ) und/oder Alfa-Cu-Mischkristall-Phase vorliegen.

Unterhalb der oberflächennahen Schicht, die überwiegend aus der EPSILON-Phase besteht, nimmt der Anteil des Zinns auf Grund der Diffusionswirkung tendenziell ab und der des Kupfers zu. Es finden sich dort Schichten bzw. Bereiche, in denen typische Phasenzusammensetzungen mit höherem Kupferanteil vorliegen:

Bei Glühtemperaturen unterhalb von 350°C liegt unterhalb der EPSILON-Phase (ca. 61,6 Gew.-% Cu) ein Sn-reicher Alfa-Cu-Mischkristall mit ca. 88-98 Gew.-%-Cu, ca.. 2-12 Gew.-% Sn vor.

Bei Temperaturen von 350°C und mehr kann dagegen zwischen der EPSILON-Phase (ε) und dem ALFA-Cu (α) des Grundmetalls mit hohem Cu-Gehalt noch die DELTA-Phase (δ) mit der Zusammensetzung Cu41Sn11 (66,6 Gew.-% Cu) angetroffen werden.

Wegen der zunehmenden Erweichung des Kupferemittenten werden für die Wärmebehandlung Temperaturen unterhalb von 450°C bevorzugt. Die Wärmebehandlung wurde vorzugsweise bei Temperaturen von 300 ... 400°C durchgeführt, die Zeiten betrugen 60 min ... 15 min; es ergaben sich Schichtdicken im Bereich von 1,3 ... 5 μm.

Die Oberfläche dieser Oberflächenschicht erscheint silberfarben und ähnelt im Erscheinungsbild einer Oberfläche aus Edelstahl oder Aluminium oder Neusilber oder CuNi30.

Der silbrige Farbton zeigt wie die Variante 1A ebenfalls einen schwach gelblichen Schimmer und ähnelt den RAL-Grautönen RAL 7032, 7035, 7038, 7047 und 9006 bzw. den RAL-Metallic-Farben 120-M, 820-M, 860-M, (Tabelle 5).

Die Oberflächenschicht dieser Variante 2B weist eine ähnlich gute Umformbarkeit und Beständigkeit gegenüber Korrosion und Fleckenbildung auch im verformten Zustand auf wie Variante 2A.

Die gute Beständigkeit gegenüber Korrosion und Fleckenbildung auch im verformten Zustand und die gute Haftung der oberflächlichen Legierungsschichten werden damit auch bei dieser Oberfläche als eine unmittelbare Folge des schichtigen Aufbaus der Oberflächenschicht mit tendenziell fließenden Übergängen der Konzentrationen von Zinn und Kupfer zwischen Oberflächenschicht und Kupferemittent gesehen, die sich aus der Wärmebehandlung ergeben.

Die antimikrobielle Aktivität ist gegenüber Variante 2A deutlich verbessert, es ergibt sich eine schnellere Abnahme der Bakterienanzahl während des Testes auf antimikrobielle Aktivität, (Tabelle 5). Diese verbesserte Gebrauchseigenschaft wurde erst durch den erhöhten Kostenaufwand ermöglicht, den der Zusatz von Silber zur Ausbildung der Ag-Sn-Phasen erforderte.

Diese Untersuchungsergebnisse belegen zusammenfassend, dass die hier geschilderte erfindungsgemäße silberfarbige Ni-freie Oberfläche sowohl eine gute antimikrobielle Aktivität als auch gleichzeitig eine gute Beständigkeit gegen Korrosion und Fleckenbildung und eine gute Umformbarkeit ohne makroskopisch sichtbare Beeinträchtigungen des Erscheinungsbildes im umgeformten Bereich besitzt.

Angabe der Zusammensetzungen an der Oberfläche von Variante 2B für unterschiedliche Sübergehalte (Tabelle 2, Tabelle 3):

Es gelten die gleichen Massenverhältnisse von Kupfer und Zinn in den Cu-Sn-Phasen wie bei Variante 2A:

-  Kupfer: Vc= 0,616, Abweichung beträgt -0,05 bis +0,025,

-  Zinn: Vs= 0,384, Abweichung beträgt - 0,025 bis +0,05.

a) Zusammensetzung für geringen Silbergehalt von 0,6 Gew.-% Ag:

-  Zusammensetzung an der Oberfläche:

Kupfer = 61,1 Gew.-% Cu mit prozessbedingter Abweichung von -5 Gew.-% Cu bis +2,5 Gew.-Cu

Zinn = 38,3 Gew.-% Sn, mit prozessbedingter Abweichung von -2,5 Gew.-% Sn bis +5 Gew.-Sn,

Silber = 0,6 Gew.-% Ag

b) Zusammensetzung für bevorzugten Silbergehalt von 3,5 Gew.-% Ag:

-  Verunreinigungen und andere Legierungselemente werden wie unter a) beschrieben berücksichtigt.

-  Zusammensetzung an der Oberfläche:

Kupfer = 58,6 Gew.-% Cu, mit prozessbedingter Abweichung von -5 Gew.-% Cu bis +2,5 Gew.-% Cu,

Zinn = 37,9 Gew.-% Sn, mit prozessbedingter Abweichung von -2,5 Gew.-% Sn bis +5 Gew.-% Sn,

Silber = 3,5 Gew.-% Ag

c) Zusammensetzung für relativ hohen Silbergehalt von 10 Gew.-% Ag:

-  Verunreinigungen und andere Legierungselemente werden wie unter a) beschrieben berücksichtigt.

-  Zusammensetzung an der Oberfläche:

Kupfer = 53,2 Gew.-% Cu, mit prozessbedingter Abweichung von -5 Gew.-% Cu bis +2,5 Gew.-% Cu,

Zinn = 36,8 Gew.-% Sn, mit prozessbedingter Abweichung von -2,5 Gew.-% Sn bis +5 Gew.-% Sn,

Silber = 10 Gew.-% Ag

Die Anforderungen der EPA an die antimikrobielle Aktivität werden problemlos erfüllt.

Die erfindungsgemäße Werkstoffzusammensetzung unterscheidet sich außerdem von den anderen bei der EPA registrierten Cu-Legierungen oder Cu-Sn-Legierungen darin, dass das Kupfer als Cu-Sn-Phase vorliegt, was an dem hohen Zinn-Gehalt von 36,8 ... 38,3 Gew.-% Sn (und dem entsprechend hohen Sn-Massenverhältnis Vs) erkennbar ist. Bei anderen als antimikrobiell registrierten Cu-Sn-Legierungen sind die Sn-Gehalte deutlich geringer und betragen 13 % Sn oder weniger. Cu liegt dann nicht als intermetallische Cu-Sn-Phase vor sondern als Alfa-Cu-Mischkristall-Phase.

Variante 3A:

Cu-Sn mit DELTA-Phase mit 66,6 % Gew.-% Cu an der Oberfläche: ohne Silber

Ein Kupferemittent (z.B. ein Band, Hohlprofil oder Rohr aus Kupfer oder einer Kupferlegierung) wird mit einer zinnreichen Oberflächenschicht versehen, wie bei Variante 1A.

In einer anschließenden Wärmebehandlung werden diese zinnreiche Oberflächenschicht und die Oberfläche des Kupferemittenten so umgewandelt, dass anschließend eine neu strukturierte Oberfläche vorliegt, die im erfindungsgemäßen Regelfall der Variante 3A vollständig aus DELTA-Phase Cu41Sn11 mit 66,6 Gew.-% Cu besteht.

Bei Temperaturen von 350 ... 582°C ist die DELTA-Phase (δ) thermo-dynamisch stabil. Bei schneller Abkühlung wie in technischen Prozessen bleibt sie jedoch auch bei RT stabil.

Der Temperaturbereich der Wärmebehandlung liegt bei technisch vorteilhaft anwendbaren Prozessen im Bereich von 350... 515°C und damit höher als der von Variante 1A und 2A. Diese erhöhten Temperaturen sind erforderlich, um die Diffusionsgeschwindigkeit zur Umstrukturierung der Oberfläche zu erhöhen, da hier ein weitergehender Stoffaustausch während der Glühbehandlung innerhalb technisch sinnvoller Zeiten erfolgen muss. Die Glühzeiten liegen dann im Bereich von 50 ... 5 min. Eine noch schnellere Umwandlung der Oberflächenschichten ist bei höheren Temperaturen möglich, z.B. bei 580°C und mehr. Allerdings kommt es dann bei vielen Kupferwerkstoffen, die als Kupferemittent verwendet werden können, bereits zu einer starken Erweichung.

Bei leichten prozesstypischen Schwankungen können Abweichungen des Kupfergehaltes von -2,5 bis + 5 Gew.-% Cu an der Oberfläche auftreten. Dann können in entsprechend geringen Anteilen weitere Cu-Sn-Phasen vorkommen, es handelt sich dabei um die EPSILON-Phase Cu3Sn ($\varepsilon$) bzw. die ALFA-Cu-Mischkristallphase ($\alpha$).

Unterhalb der relativ zinnreichen Oberflächenschicht nimmt der Zinngehalt im darunter liegenden Kupfer-Grundmaterial mit zunehmendem Abstand von der Oberfläche ab, bis er sich an den Zinn-Gehalt des Grundmaterials angenähert hat, bei Sn-freiem Kupfer geht der Sn-Gehalt damit gegen Null. Insgesamt ist der Gradient der Elemente Zinn und Kupfer bei Variante 3A weniger stark ausgeprägt als bei den Varianten 1A und 2A.

In allen Fällen der Variante 3A ergeben sich Oberflächenfarben, die silbrig sind und im Erscheinungsbild einer Oberfläche aus Edelstahl oder Aluminium oder Neusilber oder CuNi30 ähneln.

Der silbrige Farbton kann je nach Prozessbedingungen einen schwach bräunlichen Schimmer zeigen und ähnelt den RAL-Grautönen RAL 7035, 7036, 7038, 7047 und 9006 bzw. den RAL-Metallic-Farben 110-M, 820-M, 830-M (Tabelle 4).

Die Oberfläche dieser Variante 3A weist eine ähnlich gute Beständigkeit gegen Korrosion und Fleckenbildung auf wie die Variante 2A. Die Haftung der Legierungsschicht an der Oberfläche ist sehr gut. Makroskopisch sichtbare Beeinträchtigungen des Erscheinungsbildes im umgeformten Bereich sind nicht erkennbar. Wegen der weiter fortgeschrittenen Diffusion ist die Dicke dieser Oberflächenschicht jedoch dicker. Die guten Kombination von Eigenschaften wird als Folge des schichtigen Aufbaus der Materialzusammensetzung an der Oberfläche gesehen.

Die antimikrobielle Aktivität ist gegenüber Variante 2A deutlich verbessert, es ergibt sich eine schnellere Abnahme der Bakterienanzahl während des Testes auf antimikrobielle Aktivität, Tabelle 4. Diese verbesserte Gebrauchseigenschaft wurde erst durch den erhöhten Zeit- und Energieaufwand ermöglicht, den die Einstellung des höheren Cu-Anteils an der Oberfläche erforderte.

Die Zusammensetzung dieser erfindungsgemäßen Oberfläche beträgt im Durchschnitt (Tabelle 1):

Kupfer = 66,6 Gew.-% Cu, mit prozessbedingter Abweichung von -2,5 Gew.-% Cu bis +5 Gew.-% Cu

- Zinn = 33,4 Gew.-% Sn, mit prozessbedingter Abweichung von -5 Gew.-% Sn bis +2,5 Gew.-% Sn

- Verunreinigungen und andere Legierungselemente, z.B. aus der Verzinnung oder aus dem Kupferemittenten werden so berücksichtigt, dass sie in Summe jeweils zur Hälfte den Massegehalten an Kupfer und Zinn zugerechnet werden. Die Gesamtheit dieser zusätzlichen Elemente übersteigt in Summe nicht den Gehalt von 3 % an der Oberfläche.

Massenverhältnisse von Kupfer und Zinn an der Oberfläche:

- Kupfer: $V_c$= 0,666, Abweichung beträgt -0,025 bis +0,05,

- Zinn: $V_s$= 0,334, Abweichung beträgt -0,05 bis +0,025,.

Die Anforderungen der EPA an die antimikrobielle Aktivität werden problemlos erfüllt.

Im Gegensatz zu dieser erfindungsgemäßen Werkstoffzusammensetzung weisen alle anderen bisher von der EPA registrierten antimikrobiellen Cu-Sn-Legierungen einen deutlich höheren Gehalt des antimikrobiell wirkenden Elementes Kupfer auf der dann höher als 86 Gew.-% Cu ist.

Variante 3B:

Cu-Sn mit DELTA-Phase an der Oberfläche, mit Silber

Ein Kupferemittent (z.B. ein Band, Hohlprofil oder Rohr aus Kupfer oder einer Kupferlegierung) wird mit einer zinnreichen Oberflächenschicht versehen, die 0,6 - 10 Gew.-% Ag besitzt. Diese Beschichtung erfolgt wie bei Variante 1 B.

In einer anschließenden Wärmebehandlung werden die zinnreiche Oberflächenschicht und die Oberfläche des Kupferemittenten so umgewandelt, dass anschließend eine neu strukturierte Oberfläche vorliegt, bei der das dort vorhandene Kupfer mit Zinn im erfindungsgemäßen Regelfall der Variante 3B vollständig die intermetallische DELTA-Phase Cu41Sn11 ($\delta$) mit einem Cu-Gehalt von 66,6 Gew.-% Cu gebildet hat.

Daneben kommen in flächenmäßig deutlich geringerem Anteil fein verteilte Ag-Sn-Phasenausscheidungen vor, da der deutlich überwiegende Anteil des vorhandenen Silbers bei der erfindungsgemäßen Wärmebehandlung in Form der intermetallischen Phasen Ag3Sn oder Ag4Sn anfällt, die in die umgebende Matrix aus Cu-Sn-Phase eingebettet sind. Der Flächenanteil dieser Ag-haltigen Phasen beträgt 3 % bis ca. 25% je nach Ag-Gehalt der Ag-haltigen Zinnschicht.

Diese Ag-Sn-Ausscheidungen sind an der Oberfläche nur unter dem Elektronenmikroskop im Detail zu erkennen. Es hängt von der Temperatur bei der Wärmebehandlung ab, in welcher Form die Ag-Sn-Phasen entstehen: Bei Temperaturen im Bereich von >480°C ... 677°C sind Ag3Sn-Phasen instabil und wandeln sich in Ag4Sn-Phasen (ZETA-Ag, ξ-Ag) um.

Die gesamte Oberfläche ist damit mit intermetallischer DELTA-Phase Cu41Sn11 (δ) und mit intermetallischen Ag-Sn-Phasen bedeckt.

Bei leichten prozesstypischen Schwankungen können Abweichungen des Kupfergehaltes von -2,5 Gew.-% Cu bis + 5 Gew.-% Cu an der Oberfläche auftreten. Dann können dort in entsprechend geringen Anteilen je nach Temperatur und Zusammensetzung auch die intermetallischen Phasen EPSILON (ε) oder Alfa-Cu-Mischkristall-Phase vorliegen.

Technisch interessant sind Wärmebehandlungen mit Temperaturen im Bereich von 350 ... ca. 580°C.

Unterhalb der relativ zinnreichen Legierungsschicht an der Oberfläche nimmt der Zinngehalt wie bei Variante 3A im darunter liegenden Kupferemittenten mit zunehmendem Abstand von der Oberfläche ab, bis er sich an den Zinn-Gehalt des Kupferemittenten angenähert hat, bei Sn-freiem Kupfer geht der Sn-Gehalt damit gegen Null. Insgesamt ist der Gradient der Elemente Zinn und Kupfer bei Variante 3A weniger stark ausgeprägt als bei den Varianten 1A und 2A.

In allen Fällen der Variante 3A ergeben sich Oberflächenfarben, die silbrig sind und im Erscheinungsbild einer Oberfläche aus Edelstahl oder Aluminium oder Neusilber oder CuNi30 ähneln.

Der silbrige Farbton kann je nach Prozessbedingungen einen schwach bräunlichgelben Schimmer zeigen und ähnelt den RAL-Grautönen RAL 7035, 7036, 7038, 7047 und 9006 bzw. den RAL-Metallic-Farben 820-M, 830-M,860-M, (Tabelle 5).

Die Oberfläche dieser Variante 3B weist eine ähnlich gute Beständigkeit gegenüber Korrosion und Fleckenbildung auf wie die Variante 3A, das gilt insbesondere auch im umgeformten Zustand. Die Haftung der Legierungsschicht an der Oberfläche bei Umformungen ist sehr gut. Makroskopisch sichtbare Beeinträchtigungen des Erscheinungsbildes im umgeformten Bereich sind nicht erkennbar.

Die gute Beständigkeit gegenüber Korrosion und Fleckenbildung werden als Folge der guten Haftung und des schichtigen Aufbaus der Oberflächenstruktur gesehen, da auf diese Weise Beschädigungen der Oberfläche bei Umformungen minimal sind. Falls es dennoch zu Anrissen in der Oberfläche kommt, bewirkt der am Rissgrund vorliegende durch die Diffusion höher mit Sn angereicherte Kupferemittent einen verbesserten Schutz gegenüber korrosiven Angriffen.

Die antimikrobielle Aktivität ist gegenüber Variante 3A verbessert, es ergibt sich eine schnellere Abnahme der Bakterienanzahl während des Testes auf antimikrobielle Aktivität, (siehe Tabelle 5). Diese verbesserte Gebrauchseigenschaft wurde erst durch den erhöhten Kostenaufwand ermöglicht, den der Zusatz von Silber zur Ausbildung der Ag-Sn-Phasen erforderte.

Die erfindungsgemäße durchschnittliche Zusammensetzung an der Oberfläche lässt sich in Abhängigkeit des Silbergehaltes angeben (Variante 3B in Tabelle 2, Tabelle 3)

Es gelten die gleichen Massenverhältnisse von Kupfer und Zinn in den Cu-Sn-Phasen wie bei Variante 3A:

- Kupfer: Vc= 0,666, Abweichung beträgt -0,025 bis +0,05,

- Zinn: Vs= 0,334, Abweichung beträgt -0,05 bis +0,025,.

a) Zusammensetzung für geringen Silbergehalt von 0,6 Gew.-% Ag:

- Verunreinigungen und andere Legierungselemente, z.B. aus der Verzinnung oder aus dem Kupferemittenten werden so berücksichtigt, dass sie in Summe jeweils zur Hälfte den Massegehalten an Kupfer und Zinn zugerechnet werden. Die Gesamtheit dieser zusätzlichen Elemente übersteigt in Summe nicht den Gehalt von 3 % an der Oberfläche.

- Zusammensetzung an der Oberfläche:

Kupfer = 66,1 Gew.-% Cu,
mit prozessbedingter Abweichung von -2,5 Gew.-% Cu bis +5 Gew.-% Cu

Zinn = 33,3 Gew.-% Sn,

mit prozessbedingter Abweichung von -5 Gew.-% Sn bis +2,5 Gew.-% Sn

Silber = 0,6 Gew.-% Ag

b) Zusammensetzung für bevorzugten Silbergehalt von 3,5 Gew.-% Ag:

- Verunreinigungen und andere Legierungselemente werden wie unter a) beschrieben berücksichtigt.

- Zusammensetzung an der Oberfläche:

Kupfer = 63,4 Gew.-% Cu,
mit prozessbedingter Abweichung von -2,5 Gew.-% Cu bis +5 Gew.-% Cu

Zinn = 33,1 Gew.-% Sn,
mit prozessbedingter Abweichung von -5 Gew.-% Sn bis +2,5 Gew.-% Sn

Silber = 3,5 Gew.-% Ag

c) Zusammensetzung für relativ hohen Silbergehalt von 10 Gew.-% Ag:

- Verunreinigungen und andere Legierungselemente werden wie unter a) beschrieben berücksichtigt.

- Zusammensetzung an der Oberfläche:

Kupfer = 57,6 Gew.-% Cu, mit prozessbedingter Abweichung von -2,5 Gew.-% Cu bis +5 Gew.-% Cu

Zinn = 32,4 Gew.-% Sn, mit prozessbedingter Abweichung von -5 Gew.-% Sn bis +2,5 Gew.-% Sn

Silber = 10 Gew.-% Ag

Die Anforderungen der EPA an die antimikrobielle Aktivität werden problemlos erfüllt.

Im Gegensatz zu dieser erfindungsgemäßen Werkstoffzusammensetzung weisen alle anderen bisher von der EPA registrierten antimikrobiellen Cu-Sn-Legierungen einen deutlich höheren Gehalt des antimikrobiell wirkenden Elementes Kupfer auf der dann höher als 86 Gew.-% Cu ist.

Weitere vorteilhafte Varianten:

Kupferemittent (Grundmaterial):

Die erfindungsgemäße antimikrobielle Oberfläche auf einem Kupferemittenten wird erst durch eine Wärmebehandlung bei Temperaturen oberhalb von 150°C erzeugt. Mit zunehmender Temperatur und/oder Glühdauer erweichen dabei normale unlegierte Kupferemittenten aus den Standard-Kupfersorte DHP-Cu oder ETP-Cu. Um dieser Materialerweichung entgegenzuwirken, können als Kupferemittent solche legierten Kupferwerkstoffe verwendet werden, die durch den Zusatz geringer Konzentrationen anderer Legierungselemente eine gezielt höhere Erweichungstemperatur und/oder eine höhere Festigkeit besitzen. Der Einsatz solcher Cu-Legierungen als Kupferemittent ergibt für den Aufbau und die Zusammensetzung der erfindungsgemäßen antimikrobiellen Oberfläche keine wesentliche Änderung der Zusammensetzung als die in den Varianten 1A bis 3B angegebenen, wenn die Gehalte an Legierungselementen in den Kupferemittenten gering sind. Die zusätzlich im Kupferemittenten enthaltenen Legierungselemente wirken sich dann nur geringfügig auf die Oberflächenzusammensetzung nach der Wärmebehandlung aus und sind in den bereits angegebenen erfindungsgemäßen Elementbereichen für zusätzliche Verunreinigungen oder Legierungszusätze berücksichtigt.

Als Kupferemittenten und bei Kupferwerkstoffen, bei denen der Träger den Kupferemittenten bildet, kommen für eine erfindungsgemäße Oberflächenschicht z.B. folgende Cu-Werkstoffe in Frage:

- P-haltiges oder P-desoxidiertes Kupfer mit bis zu 600 ppm P oder mehr (Werkstoffnummern: z.B. C10300, C12000, C12200, C12220)

- O-freies Kupfer (Werkstoffnummern: z.B. C10100)

- O-haltiges Kupfer (Werkstoffnummern: z.B. C11000,

- Sn-haltiges Kupfer,

z.B. CuSn0,2 (C14410),
CuSn1 (C50500),
CuSn2 (C50700),
CuSn4 (C51100),
CuSn5 (C51000),
CuSn6 (C51900),
CuSn8 (C52100),

- niedrig legierte Werkstoffe mit erhöhter Erweichungstemperatur:

z.B. CuAg0,1P (C10700, C12100),
CuFe0,1P (C19210)
CuFe2P (C19400)
CuMg0,3 (C18661)
CuSn0,1MgP (C15500)
CuZr C15000)
CuCrZr (C18400, C18150) usw.

Mattierte Oberflächen:

Aus optischen oder ästhetischen Beweggründen heraus werden für verschiedene dekorative Anwendungen ausdrücklich nicht-glänzende, mattierte Oberflächen gewünscht.

Solche Oberflächen lassen sich durch Abwandlung des erfindungsgemäßen Herstellverfahrens erzielen, indem die Glühbehandlung so geführt wird, dass durch den gezielten Zutritt von Sauerstoff in der Glühatmosphäre ein Teil des an der Oberfläche vorhandenen Metalls oxidiert wird.

Es wurde festgestellt, dass auf diese Weise eine Oberfläche hergestellt werden kann, auf der separate Oxidpartikel vorliegen, die nicht als durchgehender Deckfilm vorhanden sind. Durch diese Oxidpartikel wird der Glanzgrad abgeschwächt und die dazwischen vorliegende unbedeckte Metalloberfläche wirkt weiterhin antimikrobiell.

Alternativ kann die Oberfläche auch durch Bürsten oder Abreiben mit abrasiv wirkenden Medien lokal aufgeraut werden, wodurch sich eine metallische Oberfläche mit attraktivem mattem Erscheinungsbild ("gebürstet") ergibt. Es wurde festgestellt, dass die Dicke und Härte der erfindungsgemäßen Schichten genügend Reserven für den Materialabtrag bietet, der beim Bürstprozess auftritt, wenn die erfindungsgemäßen Oberflächenschichten aus einem Vormaterial hergestellt werden, das unter industriellen Bedingungen feuerverzinnt oder galvanisch verzinnt worden ist.

Verarbeitbarkeit:

Es ist bekannt, dass Zinnschichten (mit oder ohne Silberzusatz) eine gute Duktilität und Umformbarkeit besitzen, wenn sie durch Feuerverzinnung oder durch die üblichen galvanischen Beschichtungsverfahren auf Kupfer abgeschieden werden. Die Erzeugung der erfindungsgemäßen Oberflächen durch eine Wärmebehandlung wird daher nicht dadurch beeinträchtigt, dass vor der Wärmebehandlung eine Umformung des verzinnten Grundmaterials stattgefunden hat, bei der die Zinnschicht und der Verbund zum Kupferemittenten im wesentlichen intakt bleiben.

Es gelten auch in diesem Fall die bereits erläuterten Zusammenhänge über die Eigenschaften der erfindungsgemäßen Oberflächen nach der Wärmebehandlung.

Bauteilgeometrie:

Die hier dargestellten Eigenschaften der erfindungsgemäßen Oberflächen von Trägern aus Kupfer oder einer Kupferlegierung sind unabhängig von der Form des Kupferemittenten. Die Oberflächen können daher ebenso auf der Innenseite von Rohren erzeugt werden.

Die Rohre können vor der Herstellung der efindungsgemäßen Oberflächen als nahtloses Rohr oder als längsnahtgeschweißtes Rohr vorliegen. Das längsnahtgeschweißte Rohr ist dabei aus einem rohrförmig eingeformten Band erzeugt worden, welches in Längsrichtung an den gegeneinander geformten Bandkanten zu einem Rohr verschweißt worden ist.

Das Rohr oder Hohlprofil kann einen kreisrunden Querschnitt haben oder alternativ einen beliebig anders geformten Querschnitt, z.B. Rechteckrohr, Ovalrohr.

Das Hohlprofil kann wie ein Rohr eine geschlossene Form besitzen oder eine offene wie ein Hohlprofil mit C-Profil.

Der Kupferemittent unter der erfindungsgemäßen antimikrobiellen Oberflächenschicht kann auf verschiedene Weise hergestellt werden, z.B. durch Walzen von Kupferwerkstoff-Vormaterial, durch Strangpressen oder Ziehen von Kupferwerkstoffen, durch Zerspanen von Kupferlegierungsvormaterialien hergestellte Kupferlegierungskörper, durch galvanische Abscheidung hergestellte Kupferkörper, auf pulvermetallurgischem Wege hergestellte Körper aus Kupfer oder Kupferlegierung, durch Sprühkompaktieren hergestellte Körper aus Kupferlegierungen, durch Längsnahtschweißen von eingeformten Bändern zu einem Rohr oder Hohlprofil usw.

Der Kupferemittent in Form eines dünnen Bleches, Rohres, Hohlprofiles o.ä. kann auf der Fläche, die der Oberfläche abgewandt ist, mit einer weiteren Materialschicht, dem Träger, aus einem anderen Material verstärkt sein, wobei dieses weitere Material mit dem Kupferemittenten der erfindungsgemäßen antimikrobiellen Oberfläche innig verbunden ist, um so die Beständigkeit gegenüber einer Verformung zu erhöhen. Dieser mit dem Kupferemittenten verbundene Träger kann z.B. Stahl, Aluminium, Kunststoff, glasfaserverstärkter Kunststoff usw. sein.

Der Kupferemittent kann aus einer Kombination unterschiedlicher Vorformen bestehen, die vor der Erzeugung der erfindungsgemäßen Oberfläche miteinander verbunden worden sind, z.B. durch Verschweißen, Reibschweißen, so dass eine durchgehende Kupferoberfläche vorhanden ist, auf der zunächst die erfindungsgemäße Oberflächenschicht mit einer Verzinnung aufgebracht wird und die dann mit einer Wärmebehandlung in die erfindungsgemäße Oberfläche umgewandelt wird.

Verzinnung

Die auf den Kupferemittenten aufgebrachte Zinnschicht, aus der in einer Wärmebehandlung die erfindungsgemäße Cu-Sn-Oberflächenschicht erzeugt wird, kann auch durch alternative Verzinnungsverfahren aufgebracht werden, z.B. durch chemische stromlose Abscheidung von Zinn aus einer zinnhaltigen Lösung oder durch physikalische Abscheidung aus der Gasphase (PVD).

Galvanischer Cu-Sn-Abscheidung

Kupfer und Zinn können in galvanischen Prozessen gleichzeitig auf einem Kupferemittenten abgeschieden werden, wobei dabei bereits die erfindungsgemäßen Massenverhältnisse von Kupfer und Zinn näherungsweise eingestellt werden können.

Bei der gleichzeitigen galvanischen Abscheidung von Kupfer und Zinn entstehen allerdings trotz gleicher stöchiometrischer Zusammensetzung metastabile metallkundliche Phasen, die sich in ihrer metallkundlichen Struktur von den Gleichgewichtsphasen unterscheiden. Erst bei einer Wärmebehandlung bei erhöhten Temperaturen von ca. 200°C kommt es zu einer Umstrukturierung.

Entsprechend ihrer verschiedenen Mikrostruktur besitzen die galvanischen Schichten auch andere Eigenschaften (z.B. Härte, Verformbarkeit usw.) als die Schichten, die durch Diffusion und Wärmebehandlung erzeugt wurden.

Um die erfindungsgemäßen Cu-Sn-Oberflächen mit antimikrobieller Wirkung zu erzielen, werden daher im Anschluss an eine galvanische Abscheidung von Kupfer und Zinn zusätzliche Behandlungsschritte vorgesehen, bei denen die galvanisch abgeschiedene Cu-Sn-Schicht und die Oberfläche des darunter befindlichen Grundkörpers in eine erfindungsgemäße antimikrobielle Oberfläche umgewandelt werden:

Dieser zusätzlichen Behandlungsschritte beinhalten das Aufheizen des beschichteten Kupferemittenten, die Wärmebehandlung der galvanisch abgeschiedenen Oberflächenschicht und des Übergangsbereiches von Kupferemittent zur Oberflächenschicht bei Temperaturen > 150°C zur Neustrukturierung der Oberfläche und die anschließende zügige Abkühlung mit Wasser, um die unkontrollierte Veränderung der Oberfläche durch farblich unterschiedliche Anlaufschichten zu vermeiden. Im Zuge dieser Wärmebehandlung wird die metallkundliche Struktur der galvanisch abgeschiedenen Oberflächenschicht in die stabilen Gleichgewichtsphasen ($Cu_3Sn$ / $\varepsilon$, bzw. $Cu_6Sn_5$ / $\eta$) des Kupfer-Zinn-Zustandssystems umgewandelt. Gleichzeitig wird ein Stoffaustausch zwischen Cu- und Zinn-Atomen des Kupferemittent und der Oberflächenschicht im Bereich der Grenzfläche in Gang gesetzt, wodurch dort ein fließender Übergang der ElementKonzentrationen entsteht, was für eine gute Haftung und Beständigkeit bei Umformungen vorteilhaft ist.

Nach der zusätzlichen Wärmebehandlung liegt dann eine antimikrobiell wirksame erfindungsgemäße Oberfläche vor, deren Zusammensetzung je nach Abscheidungsbedingungen der "Variante 1A" oder alternativ "Variante 2A" oder alternativ "Variante 3A" entspricht. Die Veränderung der Kristallstruktur lässt sich durch die hierfür übliche Methoden der Röntgenfeinstrukturanalyse nachweisen. Diese Oberfläche entspricht den Vorgaben der EPA nach antimikrobieller Wirksamkeit, sie ist silberfarben, Ni-frei und zeigt gute Beständigkeit gegen Korrosion und Fleckenbildung.

Längsnahtgeschweißtes Hohlprofil

Ein Hohlprofil mit einer erfindungsgemäßen Oberflächenschicht kann alternativ auch dadurch hergestellt werden, dass ein verzinntes Band aus Kupfer oder Kupferlegierung rohrförmig in Längsrichtung eingeformt wird und dann an den Stoßkanten in Längsrichtung verschweißt wird. Die für die Diffusionsbehandlung erforderliche Wärmebehandlung kann dann zweckmäßigerweise im Anschluss an den Schweißprozess kontinuierlich in einer Wärme durchgeführt werden. Hierdurch werden folgende Vorteile gegenüber einer Fertigung mit separaten Fertigungsschritten erzielt:

- Energieeinsparung beim Aufheizen für die Wärmebehandlung des Diffusionsprozesses unter Ausnutzung der Wärme des Schweißprozesses,

- kompakte Anlagenbauweise, weniger Platzbedarf für die Fertigungsanlagen, was Einsparung an Investitionsmitteln bedeutet,

- kurze Verweildauer des Materials im Fertigungsprozess mit entsprechend geringerer Kapitalbindung an das Einsatzmaterial, wodurch die Wirtschaftlichkeit des Verfahrens gesteigert wird.

Die bei der Wärmebehandlung entstehende silberfarbene Oberfläche besitzt die erfindungsgemäße Kombination von positiven Eigenschaften.

Die erfindungsgemäßen Metallrohre und Metallbänder eignen sich auf Grund ihrer sehr guten Oberflächeneigenschaften insbesondere für den Einsatz in Krankenhäusern und dem Sanitätsbereich. Beispielsweise Griffe und Klinken aus Kupferrohr mit einer, wie oben beschriebenen, Kupfer-Zinn-Schicht haben neben antimikrobiellen Eigenschaften ein gleichmäßiges silbrig-weißes Erscheinungsbild und lösen keine Allergien aus. Gerade Flächen, die ständig von vielen Menschen berührt werden, sollten antimikrobielle Eigenschaften aufweisen, um ein Bakterienwachstum und somit die stete Bakterienverbreitung zu vermeiden.

Tabelle 1: CuSn-Phasen und Schichtzusammensetzung an der Oberfläche in Abhängigkeit von den Glühparametern, Herstellung aus silberfreien Zinnschichten

| | Variante 1A | Variante 2A | Variante 3A |
|---|---|---|---|
| Cu-Sn-Phase an der Oberfläche (Regelfall) | η | ε | δ |
| Zusammensetzung an der Oberfläche Gew.-% | - Kupfer: 39 ... 40 Gew.-% Cu, mit Abweichung ±5 Gew.-% Cu<br>- Zinn: 61 ... 60 Gew.-% Sn, mit Abweichung ±5 Gew.-% Sn<br>- Verunreinigungen, andere Elemente aus Kupferemittent:<br>-- werden je zur Hälfte Cu und Sn zugerechnet,<br>- max. 3 Gew.-% in Summe an der Oberfläche | Kupfer: 61,6 Gew.-% Cu , mit Abweichung. -5...+2,5 Gew.-% Cu<br>Zinn: 38,4 Gew.-% Sn, mit Abweichung -2,5...+5 Gew.-% Sn<br>- Verunreinigungen, andere Elemente aus Kupferemittent:<br>- werden je zur Hälfte Cu und Sn zugerechnet,<br>-- max. 3 Gew.-% in Summe an der Oberfläche | - Kupfer: 66,6 Gew.-% Cu, mit Abweichung -2,5...+5 Gew.-% Cu<br>- Zinn: 33,4 Gew.-% Sn, mit Abweichung. -5...+2,5 Gew.-% Sn<br>- Verunreinigungen, andere Elemente aus Kupferemittent:<br>-- werden je zur Hälfte Cu und Sn zugerechnet,<br>-- max. 3 Gew.-% in Summe an der Oberfläche |
| Massenverhältnisse von Kupfer und Zinn an der Oberfläche Regelfall) | - Kupfer Vc= 0,39 ... 0,40<br>- Zinn Vs= 0,61 ... 0,60%. | - Kupfer: Vc= 0,616<br>- Zinn: Vs= 0,384. | - Kupfer: Vc= 0,666<br>- Zinn: Vs= 0,334 |
| Wärmebehandlung beispielhaft, [*]<br>- Temperatur, °C<br><br>- Zeit, min | - 150 ... 300 °C (max. 415 °C)<br><br>-120 ...2 min | - 300 ... 400 °C (max. 670°C [**])<br><br>- 60 ... 15 min | - 320 ... 500 °C (max. 740°C<br><br>[**] )- 50 ... 5 min |
| [*] Schichtdicke 1,3 ... 5 μm | | [**] vollständige Erweichung des Kupferemittenten | |

Tabelle 2: intermetallische Phasen und Schichtzusammensetzung an der Oberfläche in Abhängigkeit von den Glühparametern, Herstellung aus silberhaltigen Zinnschichten mit vorzugsweisem Ag-Gehalt von 3,5 Gew.-% Ag in der Zinnschicht

|  | Variante 1B | Variante 2B | Variante 3B |
|---|---|---|---|
| Phasen an der Oberfläche (erfindungsgemäßer Regelfall, überwiegender Anteil ist unterstrichen) | $\underline{\eta}$ + Ag$_3$Sn | $\underline{\varepsilon}$ + Ag$_3$Sn (T≤480°C) *oder alternativ* $\underline{\varepsilon}$ + Ag$_4$Sn (T>480°C) | $\underline{\delta}$ + Ag$_3$Sn (T≤480°C) *oder alternativ* $\underline{\delta}$ + Ag$_4$Sn (T>480°C) |
| Zusammensetzung an der Oberfläche, bei bevorzugtem Ag-Gehalt von 3,5% Ag Gew.-% | - Kupfer: 38,1, Abweichung ±5 Gew.-% Cu<br>- Zinn: 58,4, Abweichung ±5 Gew.-% Sn<br>- Silber: 3,5<br>- Verunreinigungen, andere Elemente aus Kupferemittent:<br>-- werden je zur Hälfte Cu und Sn zugerechnet,<br>-- max. 3 Gew.-% in Summe an der Oberfläche | - Kupfer: 58,6, Abweichung -5...+2,5 Gew.-%<br>- Zinn: 37,9, Abweichung -2,5...+5 Gew.-%<br>- Silber: 3,5<br>- Verunreinigungen, andere Elemente aus Kupferemittent:<br>-- werden je zur Hälfte Cu und Sn zugerechnet,<br>-- max. 3 Gew.-% in Summe an der Oberfläche | - Kupfer: 63,4, Abweichung -2,5...+5 Gew.-%<br>- Zinn: 37,1, Abweichung -5...+2,5 Gew.-%<br>- Silber: 3,5<br>- Verunreinigungen, andere Elemente aus Kupferemittent:<br>-- werden je zur Hälfte Cu und Sn zugerechnet,<br>-- max. 3 Gew.-% in Summe an der Oberfläche |
| Massenverhältnisse von Kupfer und Zinn in CuSn-Phasen an der Oberfläche, Regelfall, % | - Kupfer Vc= 0,39 ... 0,40<br>- Zinn Vs= 0,61 ... 0,60%. | - Kupfer: Vc= 0,616<br>- Zinn: Vs= 0,384. | - Kupfer: Vc= 0,666<br>- Zinn: Vs= 0,334 |
| Wärmebehandlung beispielhaft, [*]<br><br>- Temperatur, °C<br>- Zeit, min | - 150 ... 300 °C (max. 415 °C)<br>- 120 ... 2 min | - 300 ... 400 °C (max. 670°C [**] )<br>- 60 ... 15 min | - 320 ... 500 °C (max. 740°C [**] )<br>- 50 ... 5 min |

[*] Schichtdicke 1,3 ... 5 μm

[**] vollständige Erweichung des Kupferemittenten

[***] Verunreinigungen, andere Elemente aus Kupferemittenten: werden je zur Hälfte Cu und Sn zugerechnet, max. 3 Gew.-% in Summe an der Oberfläche

(Fortsetzung von Tabelle 2)

Tabelle 3: intermetallische Phasen und Schichtzusammensetzung an der Oberfläche in Abhängigkeit von den Glühparametern, Herstellung aus silberhaltigen Zinnschichten mit 0,6 Gew.-% Ag bzw. 10 Gew.-Ag in der Zinnschicht

|  | Variante 1B | Variante 2B | Variante 3B |
|---|---|---|---|
| Phasen an der Oberfläche (Regelfall, überwiegender Anteil ist unterstrichen) | $\underline{\eta}$ + Ag$_3$Sn | $\underline{\varepsilon}$ + Ag$_3$Sn (T≤480°C) *oder alternativ* $\underline{\varepsilon}$ + Ag$_4$Sn (T>480°C) | $\underline{\delta}$ + Ag$_3$Sn (T≤480°C) *oder alternativ* $\underline{\delta}$ + Ag$_4$Sn (T>480°C) |
| Zusammensetzung an der Oberfläche, Gew.-%; | a) Zinn mit 0,6% Ag:<br>- Kupfer: 39,7, Abweichung ±5 Gew.-% Cu<br><br>- Zinn: 59,7, Abweichung ±5 Gew.-% Sn | a) Zinn mit 0,6% Ag:<br>- Kupfer: 61,6, Abweichung -5...+2,5 Gew.-%<br><br>- Zinn: 38,3, Abweichung -2,5...+5 Gew.-% | a) Zinn mit 0,6% Ag:<br>1- Kupfer: 66,1, Abweichung -2.5...+5 Gew.-%<br>- Zinn: 33,3, Abweichung -5...+2,5 Gew.-% |

(fortgesetzt)

|  | Variante 1B | Variante 2B | Variante 3B |
|---|---|---|---|
|  | - Silber: 0,6<br>- Verunreinigungen, and. Elemente<br>[***] | - Silber: 0,6<br>- Verunreinigungen, and. Elemente<br>[***] | - Silber: 0,6<br>- Verunreinigungen, and. Elemente<br>[***] |
|  | b) Zinn mit 10% Ag:<br>- Kupfer: 34,5, Abweichung ±5 Gew.-% Cu<br>- Zinn: 55,5, Abweichung ±5 Gew.-% Sn<br>- Silber: 10<br>- Verunreinigungen, and. Elemente<br>[***] | b) Zinn mit 10% Ag:<br>- Kupfer: 53,2, Abweichung -5...+2,5 Gew.-%<br>- Zinn: 36,8, Abweichung -2,5...+5 Gew.-%<br>- Silber: 10<br>- Verunreinigungen, and. Elemente<br>[***] | b) Zinn mit 10% Ag:<br>- Kupfer: 57,6, Abweichung -2,5...+5 Gew.-%<br>- Zinn: 32,4, Abweichung -5...+2,5 Gew.-%<br>- Silber: 10<br>- Verunreinigungen, and. Elemente<br>[***] |
| Massenverhältnisse von Kupfer und Zinn in Cu-Sn-Phasen an der Oberfläche, (Regelfall), % | - Kupfer $V_c$= 0,39 ... 0,40<br>- Zinn $V_s$= 0,61 ... 0,60%. | - Kupfer: $V_c$= 0,616<br>- Zinn: $V_s$= 0,384. | - Kupfer: $V_c$= 0,666<br>- Zinn: $V_s$= 0,334 |
| Wärmebehandlung beispielhaft, [*]<br><br>- Temperatur, °C<br>- Zeit, min | - 150 ... 300 °C (max. 415 °C)<br>- 120 ... 2 min | - 300 ... 400 °C (max. 670°C [**])<br>- 60 ... 15 min | - 320 ... 500 °C (max. 740 °C [**])<br>- 50 ... 5 min |
| [*] Schichtdicke 1,3 ... 5 $\mu$m; [**] vollständige Erweichung des Kupferemittenten; [***] Verunreinigungen, andere Elemente aus Kupferemittenten: werden je zur Hälfte Cu und Sn zugerechnet, max. 3 Gew.-% in Summe an der Oberfläche |||

(Fortsetzung von Tabelle 3)

Tabelle 4: Eigenschaften von erfindungsgemäßen Cu-Sn-Schichten ohne Ag-Zusatz

|  | Variante 1A, | Variante 2A, | Variante 3A, |
|---|---|---|---|
| Aussehen der Oberfläche | - silberfarbig,<br>- ähnlich wie Edelstahl, Aluminium, Neusilber oder CuNi30,<br>- schwacher Blauschimmer möglich | - silberfarbig,<br>- ähnlich wie Edelstahl, Aluminium, Neusilber oder CuNi30,<br>- schwacher Blauschimmer möglich | - silberfarbig,<br>- ähnlich wie Edelstahl, Aluminium, Neusilber oder CuNi30,<br>- schwacher Braunschimmer möglich |
| ähnlicher RAL-Grauton | 7035,<br>7038,<br>7040,<br>7047,<br>9006 | 7035,<br>7038,<br>7040,<br>7047,<br>9006 | 7035,<br>7036,<br>7038,<br>7047,<br>9006 |
| ähnlicher RAL-Metallicton | 110-M<br>170-M<br>820-M | 110-M<br>180-M<br>820-M | 110-M<br>820-M<br>830-M |
| Beständigkeit gegen synth. Handschweiß, Flecken | sehr gut | sehr gut | sehr gut |

(fortgesetzt)

| | Variante 1A, | Variante 2A, | Variante 3A, |
|---|---|---|---|
| vis. Beurteilung von Umformbarkeit und Haftung | sehr gut | sehr gut | sehr gut |
| Antimikrobielle Aktivität (gemäß ISO 22196 | sehr gut | sehr gut | sehr gut |
| Schutz vor Allergieauslösung durch Nickel | sehr gut | sehr gut | sehr gut |
| Wirkzeit [1] | 20 ... 100% | 15 ... 80% | 10 ... 60% |
| [1] antimikrobielles Verhalten variiert in Abhängigkeit von der Bakterienart | | | |

(Fortsetzung Tabelle 4)

Tabelle 5: Eigenschaften von erfindungsgemäßen Cu-Sn-Schichten mit Ag-Zusatz

| | Variante 1B, | Variante 2B, | Variante 3B, |
|---|---|---|---|
| Aussehen der Oberfläche | - silberfarbig,<br>- ähnlich wie Edelstahl, Aluminium, Neusilber oder CuNi30,<br>- schwacher Gelbschimmer möglich | - silberfarbig,<br>- ähnlich wie Edelstahl, Aluminium, Neusilber oder CuNi30,<br>- schwacher Gelbschimmer möglich | - silberfarbig,<br>- ähnlich wie Edelstahl, Aluminium, Neusilber oder CuNi30,<br>- schwacher Braungelbschimmer möglich |
| ähnlicher RAL-Grauton | 7032,<br>7035,<br>7038,<br>7047,<br>9006 | 7032,<br>7035,<br>7038,<br>7047,<br>9006 | 7035,<br>7036,<br>7038,<br>7047,<br>9006 |
| ähnlicher RAL-Metallicton | 120-M<br>820-M<br>860-M | 120-M<br>820-M<br>860-M | 820-M<br>830-M<br>860-M |
| Beständigkeit gegen synth. Handschweiß, Flecken | sehr gut | sehr gut | sehr gut |
| vis. Beurteilung von Umformbarkeit und Haftung | sehr gut | sehr gut | sehr gut |
| Antimikrobielle Aktivität (gemäß ISO 22196) | sehr gut | sehr gut | sehr gut |
| Schutz vor Allergieauslösung durch Nickel | sehr gut | sehr gut | sehr gut |
| Wirkzeit [1] | 20 ... 80% | 15 ... 70% | 10 ... 50% |
| [1] antimikrobielles Verhalten variiert in Abhängigkeit von der Bakterienart | | | |

(Fortsetzung Tabelle 5)

Die im folgenden aufgeführten Anwendungsbeispiele betreffen Bänder mit silbrigen Oberflächen für Anwendungen, bei denen Werkstoffe bevorzugt werden, die antimikrobielle Oberflächen besitzen und die eine geringe Neigung zu Farbveränderungen durch Korrosionsprodukte oder Flecken aufweisen, z.B. als Verkleidungen im Innenbereich an Kanten, Wänden, Türen, Schränken, Geräten, Vorrichtungen, Geländern, Türklinken, Lichtschaltern in Krankenhäusern, Pflegeheimen, Kindertagesstätten, Schulen usw. bei denen häufiger Hautkontakt besteht. Die Verkleidungen können sich an Orten im Flurbereich, Sanitärbereich, Treppenbereich, Küchenbereich usw. befinden.

Beispiel 1-1: erfindungsgemäßes Band nach Variante 1A

- Kupferemittent besteht aus Cu-Band aus P-desoxidiertem Kupfer, z.B. DHP-Cu, (Werkstoff ASTM C12200), Dicke = 0,5 mm, Zustand: Hart
- Verzinnung durch Feuerverzinnung mit technisch reiner Zinnschmelze, Dicke der Zinnschicht nach der Verzinnung 2 $\mu$m:
- Wärmebehandlung bei 270°C,
- Ergebnis:Cu-Band mit Sn-Diffusionsschicht an der Oberfläche mit silbriger Farbe, Oberfläche besteht vollständig aus ETA-Phase Cu6Sn5,
  Dicke der Sn-Diffusionsschicht: 2,3 - 2,5 $\mu$m

Beispiel 1-2: erfindungsgemäßes Band nach Variante 1A

- Kupferemittent besteht aus Cu-Band aus P-desoxidiertem CuSn0,2 mit 0,2% Sn, z.B. Werkstoff ASTM C14410, Dicke = 0,6 mm, Zustand: Hart
- Verzinnung galvanisch, Dicke der Zinnschicht nach der Verzinnung 1,5 $\mu$m
- Wärmebehandlung bei 260 °C
- Ergebnis: Cu-Band mit Sn-Diffusionsschicht an der Oberfläche mit silbriger Farbe, Oberfläche besteht vollständig aus ETA-Phase Cu6Sn5, Dicke der Sn-Diffusionsschicht: 1,8 $\mu$m.

Beispiel 1-3: erfindungsgemäßes Band nach Variante 1A

- Kupferemittent besteht aus Cu-Band aus P-desoxidiertem CuSn8 mit 8% Sn, z.B. Werkstoff ASTM C52100, Dicke = 0,6 mm, Zustand: Hart
- Verzinnung chemisch, Dicke der Zinnschicht nach der Verzinnung 0,8$\mu$m
- Wärmebehandlung bei 250 °C
- Ergebnis: Cu-Band mit Sn-Diffusionsschicht an der Oberfläche mit silbriger Farbe, Oberfläche besteht vollständig aus ETA-Phase Cu6Sn5, Dicke der Sn-Diffusionsschicht: 1 $\mu$m.

Beispiel 1-4: erfindungsgemäßes Band nach Variante 1B

- Kupferemittent besteht aus Cu-Band aus P-desoxidiertem Kupfer, z.B. DHP-Cu, (Werkstoff ASTM C12200), Dicke = 0,6 mm, Zustand: Hart
- Verzinnung durch Feuerverzinnung mit Ag-haltiger Zinnschmelze mit 3,5 % Ag, Dicke der Zinnschicht nach der Verzinnung 2,5 $\mu$m,
- Wärmebehandlung bei 270°C,
- Ergebnis: Cu-Band mit Sn-Diffusionsschicht an der Oberfläche mit silbriger Farbe. Oberfläche besteht aus ETA-Phase Cu6Sn5 mit fein verteilten Ag3Sn-Phasenausscheidungen, die in die Matrix aus ETA-Phasen eingelagert sind. Dicke der Sn-Diffusionsschicht: 2,8 - 3 $\mu$m.

Beispiel 1-5: erfindungsgemäßes Band nach Variante 2A

- Kupferemittent besteht aus Cu-Band aus P-desoxidiertem Kupfer, z.B. DHP-Cu, (Werkstoff ASTM C12200), Dicke = 0,8 mm, Zustand: halbhart
- Verzinnung durch Feuerverzinnung mit technisch reiner Zinnschmelze, Dicke der Zinnschicht nach der Verzinnung 2,5 $\mu$m,
- Wärmebehandlung bei 340°C,
- Ergebnis: Cu-Band mit Sn-Diffusionsschicht an der Oberfläche mit silbriger Farbe, Oberfläche besteht vollständig aus EPSILON-Phase Cu3Sn, Dicke der Sn-Diffusionsschicht: 3 $\mu$m

Beispiel 1-6: erfindungsgemäßes Band nach Variante 2A

- Kupferemittent besteht aus Cu-Band aus P-desoxidiertem CuSn0,2 mit 0,2% Sn, z.B. Werkstoff ASTM C14410, Dicke = 0,6 mm, Zustand: Hart
- Verzinnung galvanisch, Dicke der Zinnschicht nach der Verzinnung 1,6 $\mu$m,
- Wärmebehandlung bei 320 °C
- Ergebnis: Cu-Band mit Sn-Diffusionsschicht an der Oberfläche mit silbriger Farbe, Oberfläche besteht vollständig aus EPSILON-Phase Cu3Sn, Dicke der Sn-Diffusionsschicht: 2 $\mu$m.

Beispiel 1-7: erfindungsgemäßes Band nach Variante 2B

- Kupferemittent besteht aus Cu-Band aus P-desoxidiertem Kupfer, z.B. DHP-Cu, (Werkstoff ASTM C12200), Dicke = 0,8 mm, Zustand: halbhart
- Verzinnung durch Feuerverzinnung mit Ag-haltiger Zinnschmelze mit 3,5 % Ag, Dicke der Zinnschicht nach der Verzinnung 2,5 $\mu$m,
- Wärmebehandlung bei 350°C,
- Ergebnis:Cu-Band mit Sn-Diffusionsschicht an der Oberfläche mit silbriger Farbe, Oberfläche besteht aus EPSILON-Phase Cu3Sn mit fein verteilten Ag3Sn-Phasenausscheidungen, die in die Matrix aus EPSILON-Phasen eingelagert sind. Dicke der Sn-Diffusionsschicht: 3 $\mu$m.

Beispiel 1-8: erfindungsgemäßes Band nach Variante 3A

- Kupferemittent besteht aus Cu-Band aus P-desoxidiertem CuSn0,2 mit 0,2% Sn, z.B. Werkstoff ASTM C14410, Dicke = 0,8 mm
- Verzinnung durch Feuerverzinnung mit technisch reiner Zinnschmelze, Dicke der Zinnschicht nach der Verzinnung 2,4 - 2,6 $\mu$m,
- Wärmebehandlung bei 430°C,
- Ergebnis: Cu-Band mit Sn-Diffusionsschicht an der Oberfläche mit silbriger Farbe, Oberfläche besteht vollständig aus DELTA-Phase Cu41Sn11, Dicke der Sn-Diffusionsschicht: 3 - 3,2 $\mu$m

Beispiel 1-9: erfindungsgemäßes Band nach Variante 3A

- Kupferemittent besteht aus Cu-Band aus P-desoxidiertem CuSn4 mit 4 % Sn, z.B. Werkstoff ASTM C51100, Dicke = 0,7 mm
- Verzinnung galvanisch, Dicke der Zinnschicht nach der Verzinnung 1,6 -1,8 $\mu$m
- Wärmebehandlung bei 410°C,
- Ergebnis: Cu-Band mit Sn-Diffusionsschicht an der Oberfläche mit silbriger Farbe, Oberfläche besteht vollständig aus DELTA-Phase Cu41Sn11, Dicke der Sn-Diffusionsschicht: 2 - 2,5 $\mu$m.

Beispiel 1-10: erfindungsgemäßes Band nach Variante 3B

- Kupferemittent besteht aus Cu-Band aus P-desoxidiertem CuSn4 mit 4 % Sn, z.B. Werkstoff ASTM C51100, Dicke = 0,8 mm,
- Verzinnung durch Feuerverzinnung mit Ag-haltiger Zinnschmelze mit 3,5 % Ag, Dicke der Zinnschicht nach der Verzinnung 2,5 $\mu$m,
- Wärmebehandlung bei 420°C,
- Ergebnis: Cu-Band mit Sn-Diffusionsschicht an der Oberfläche mit silbriger Farbe, Oberfläche besteht aus DELTA-Phase Cu41Sn11 mit fein verteilten Ag3Sn-Phasenausscheidungen, die in die Matrix aus DELTA-Phasen eingelagert sind. Dicke der Sn-Diffusionsschicht: 3 $\mu$m.

Beispiele für Rohre:

Die im folgenden aufgeführten Anwendungsbeispiele betreffen Rohre oder rohrförmige Hohlkörper mit silbrigen Oberflächen für Anwendungen, bei denen Werkstoffe bevorzugt werden, die antimikrobielle Oberflächen besitzen und die eine geringe Neigung zu Farbveränderungen durch Korrosionsprodukte oder Flecken aufweisen, z.B. als

- Haltestangen in Fahrstühlen, Verkehrsmitteln, im Sanitärbereich,
- Griffe an Türen, Schränken, Transportwagen in Krankenhäusern, an Krankenbetten, usw.,

- Handläufe an Geländern und Treppen, in Fluren, usw.
- Konstruktions-Bauteil im Krankenhausbereich bei Regalen, Transportwagen, Betten, Gestellen, medizinischen Vorrichtungen usw.
- Konstruktions-Bauteil im Veterinärbereich, in der Tierzucht,
- Instailationsrohre mit erfindungsgemäßer Oberfläche,
- Industrierohre in Klimageräten

Diese Rohre oder rohrförmigen Bauteile können sich in Krankenhäusern, Pflegeheimen, Tagesstätten, Schulen, Kindergärten, öffentlichen Einrichtungen, Transportmitteln und an Orten im Flurbereich, Sanitärbereich, Treppenbereich, Küchenbereich usw. so wie auf Krankenhausstationen befinden.

Beispiel 2-1: erfindungsgemäßes Rohr nach Variante 1A

- Kupferemittent besteht aus Cu-Rohr aus P-desoxidiertem Kupfer, z.B. DHP-Cu, (Werkstoff ASTM C12200), Abmessung: Wanddicke 0,8mm $\pm$0,1mm, Nenndurchmesser 18mm, Zustand: hart
- Verzinnung , z.B. galvanisch, Dicke der Zinnschicht nach der Verzinnung 1,5 $\mu$m
- Wärmebehandlung bei 250°C,
- Ergebnis: Cu-Rohr mit Sn-Diffusionsschicht an der Oberfläche mit silbriger Farbe, Oberfläche besteht vollständig aus ETA-Phase Cu6Sn5, Dicke der Sn-Diffusionsschicht: 1,8 $\mu$m

Beispiel 2-2: erfindungsgemäßes Rohr nach Variante 1A

- Kupferemittent)besteht aus Cu-Rohr aus P-desoxidiertem Kupfer, z.B. DHP-Cu, (Werkstoff ASTM C12200), Abmessung: Wandstärke 0,7mm $\pm$0,1mm, Nenndurchmesser 15mm, Zustand: hart
- Verzinnung chemisch, Dicke der Zinnschicht nach der Verzinnung 1$\mu$m
- Wärmebehandlung bei 250 °C
- Ergebnis: Cu-Rohr mit Sn-Diffusionsschicht an der Oberfläche mit silbriger Farbe, Oberfläche besteht vollständig aus ETA-Phase Cu6Sn5, Dicke der Sn-Diffusionsschicht: 1,2-1,3 $\mu$m.

Beispiel 2-3: erfindungsgemäßes Rohr nach Variante 1A

- Kupferemittent besteht aus Cu-Rohr aus P-desoxidiertem Kupfer, z.B. DHP-Cu, (Werkstoff ASTM C12200), Abmessung: Wanddicke 0,7mm $\pm$0,1mm, Nenndurchmesser 15mm, Zustand: hart
- Verzinnung durch Feuerverzinnung mit technisch reiner Zinnschmelze, Dicke der Zinnschicht nach der Verzinnung 2,3 $\mu$m
- Wärmebehandlung bei 260°C
- Ergebnis: Cu-Rohr mit Sn-Diffusionsschicht an der Oberfläche mit silbriger Farbe, Oberfläche besteht vollständig aus ETA-Phase Cu6Sn5, Dicke der Sn-Diffusionsschicht: 2,6 - 2,9 $\mu$m

Beispiel 2-4: erfindungsgemäßes Rohr nach Variante 1B

- Kupferemittent besteht aus Cu-Rohr aus P-desoxidiertem CuSn0,2 mit 0,2% Sn, z.B. Werkstoff ASTM C14410, Abmessung: Wanddicke 1mm $\pm$0,1mm, Nenndurchmesser 22mm, Zustand: Hart
- Verzinnung durch Feuerverzinnung mit Ag-haltiger Zinnschmelze mit 3,5 % Ag, Dicke der Zinnschicht nach der Verzinnung 2,5 $\mu$m
- Wärmebehandlung bei 260°C,
- Ergebnis: Cu-Rohr mit Sn-Diffusionsschicht an der Oberfläche mit silbriger Farbe, Oberfläche besteht aus ETA-Phase Cu6Sn5 mit feinverteilten Ag3Sn-Phasenausscheidungen, die in die Matrix aus ETA-Phasen eingelagert sind. Dicke der Sn-Diffusionsschicht: 2,8 - 3 $\mu$m

Beispiel 2-5: erfindungsgemäßes Rohr nach Variante 2A

- Kupferemittent besteht aus Cu-Rohr aus P-desoxidiertem Kupfer, z.B. DHP-Cu, (Werkstoff ASTM C12200), Abmessung: Wanddicke 0,8mm $\pm$0,1 mm, Nenndurchmesser 18mm, Zustand: hart
- Verzinnung galvanisch, Dicke der Zinnschicht nach der Verzinnung 1,6 $\mu$m
- Wärmebehandlung bei 320 °C
- Ergebnis: Cu-Rohr mit Sn-Diffusionsschicht an der Oberfläche mit silbriger Farbe, Oberfläche besteht vollständig aus EPSILON-Phase Cu3Sn, Dicke der Sn-Diffusionsschicht: 2 $\mu$m.

Beispiel 2-6: erfindungsgemäßes Rohr nach Variante 2A

- Kupferemittent besteht aus Cu-Rohr aus P-desoxidiertem CuSn0,2 mit 0,2% Sn, z.B. Werkstoff ASTM C14410, Abmessung: Wanddicke 1mm $\pm$0,1mm, Nenndurchmesser 22mm, Zustand: Hart
- Verzinnung durch Feuerverzinnung mit technisch reiner Zinnschmelze, Dicke der Zinnschicht nach der Verzinnung 2,5 $\mu$m
- Wärmebehandlung bei 340 °C
- Ergebnis: Cu-Rohr mit Sn-Diffusionsschicht an der Oberfläche mit silbriger Farbe, Oberfläche besteht vollständig aus EPSILON-Phase Cu3Sn, Dicke der Sn-Diffusionsschicht: 3 $\mu$m.

Beispiel 2-7: erfindungsgemäßes Rohr nach Variante 2B

- Kupferemittent besteht aus Cu-Rohr aus P-desoxidiertem CuSn0,2 mit 0,2% Sn, z.B. Werkstoff ASTM C14410, Abmessung: Wanddicke 1mm $\pm$0,1mm, Nenndurchmesser 22mm, Zustand: Hart
- Verzinnung durch Feuerverzinnung mit Ag-haltiger Zinnschmelze mit 3,5 % Ag, Dicke der Zinnschicht nach der Verzinnung 2,5 $\mu$m
- Wärmebehandlung bei 340 °C
- Ergebnis: Cu-Rohr mit Sn-Diffusionsschicht an der Oberfläche mit silbriger Farbe, Oberfläche besteht aus EPSILON-Phase Cu3Sn mit feinverteilten Ag3Sn-Phasenausscheidungen, die in die Matrix aus EPSILON-Phasen eingelagert sind. Dicke der Sn-Diffusionsschicht: 3 $\mu$m

Beispiel 2-8: erfindungsgemäßes Rohr nach Variante 3A

- Kupferemittent besteht aus Cu-Rohr aus P-desoxidiertem CuSn0,2 mit 0,2% Sn, z.B. Werkstoff ASTM C14410, Abmessung: Wanddicke 1mm $\pm$0,1mm, Nenndurchmesser 28mm, Zustand: Hart
- Verzinnung galvanisch, Dicke der Zinnschicht nach der Verzinnung 1,6 -1,8 $\mu$m
- Wärmebehandlung bei 425°C,
- Ergebnis: Cu-Rohr mit Sn-Diffusionsschicht an der Oberfläche mit silbriger Farbe, Oberfläche besteht vollständig aus DELTA-Phase Cu41Sn11, Dicke der Sn-Diffusionsschicht: 2 - 2,4 $\mu$m

Beispiel 2-9: erfindungsgemäßes Rohr nach Variante 3A

- Grundkörper (Kupferemittent) besteht aus Cu-Rohr aus P-desoxidiertem CuSn0,2 mit 0,2% Sn, z.B. Werkstoff ASTM C14410, Abmessung: Wanddicke 0,7mm $\pm$0,1mm, Nenndurchmesser 15mm, Zustand: Hart
- Verzinnung durch Feuerverzinnung mit technisch reiner Zinnschmelze, Dicke der Zinnschicht nach der Verzinnung 2,5 $\mu$m
- Wärmebehandlung bei 415°C,
- Ergebnis: Cu-Rohr mit Sn-Diffusionsschicht an der Oberfläche mit silbriger Farbe, Oberfläche besteht vollständig aus DELTA-Phase Cu41Sn11, Dicke der Sn-Diffusionsschicht: 3 $\mu$m

Quellen:

1.1 Römpps Chemie-Lexikon, Franckh'sche Verlagshandlung, Stuttgart

1.2 Spezielle Toxikologie für Chemiker, Braun et alii, Teubner Studienbücher Chemie

1.3: U.Landau: "Die Keimreduzierende Wirkung des Silbers in Hygiene, Medizin und Wasseraufbereitung, Die Oligodynamie des Silbers", Isensee Verlag, Oldenburg, 2006

1.4 Oligodynamie, Wikipedia.org, 2.3.2010

1.5 U. Landau et alii, Antibakterielle Beschichtung zur Keimabtötung, Galvanotechnik 12/2009, S. 2704 ff

1.6 ISO 2196: Plastics - Measurement of antibacterial activity on plastics surfaces

1.7 Antimicrobial Efficacy, CDA, 23.9.2009:

http://www.copper.org/antimicrobial/properties/efficacy.html

1.8 Metall, 6/2008, S. 364

1.9 Internet-Seite der CDA:

http://www.copper.org/antimicrobial/regulatory/registered_alloys.html

1.10 Wilks, Michels, Keevil; The Survival of Escheria coli 0157 on a range of metal surfaces, International Journal of Food Microbiology 105 (2005) 445-454

1.11 Comparing Antimicrobial Efficacy of Copper and Silver for interior Touch Surface Applications, CDA, Oct. 2009

**Patentansprüche**

1. Produkt mit einer Oberflächenschicht aus einer antimikrobiellen, silberfarbenen Legierung auf Basis von Kupfer und Zinn, mit folgenden Merkmalen:

   - Die Oberflächenschicht befindet sich auf einem Kupferemittenten, der aus Kupfer oder einer Kupfer-Legierung besteht, wobei Kupfer aus dem Kupferemittenten durch Diffusion in die Oberflächenschicht eingelagert ist;
   - Die Oberflächenschicht auf Basis einer Kupfer-Zinn-Legierung weist wenigstens eine bei Raumtemperatur stabile intermetallische Phase aus Kupfer und Zinn auf;
   - Die Oberflächenschicht besteht an der dem Kupferemittenten abgewandten Oberfläche überwiegend oder vollständig aus einer einzigen oder aus zwei der folgenden intermetallischen CuSn-Phasen:
   - ETA-Phase (Cu6Sn5) mit 40 Gew.-% Kupfer in dieser Phase
   - EPSILON-Phase (Cu3Sn) mit 61 Gew.-% Kupfer in dieser Phase
   - DELTA-Phase (Cu41 Sn11) mit 67 Gew.-% Kupfer in dieser Phase wobei herstellungsbedingte Abweichungen der Kupfer-Konzentration an der Oberfläche in einem Bereich von maximal +/- 5 Gew.-% Kupfer liegen.

2. Produkt nach Anspruch 1, **dadurch gekennzeichnet, dass** die an ihrer Oberfläche überwiegend aus einer oder zwei der genannten intermetallischen CuSn-Phasen bestehende Oberflächenschicht an ihrer Oberfläche zwischen 0,6 und 10 Gew.-% Silber enthält, wobei das Silber zumindest teilweise in Form einer intermetallischen SnAg-Phase vorliegt.

3. Produkt nach Anspruch 2, **dadurch gekennzeichnet, dass** die an ihrer Oberfläche überwiegend aus einer oder zwei der genannten intermetallischen CuSn-Phasen bestehende Oberflächenschicht an ihrer Oberfläche zwischen 2 und 5 Gew.-% Silber enthält, wobei das Silber zumindest teilweise in Form einer intermetallischen SnAg-Phase vorliegt.

4. Produkt nach einem der Ansprüche 1 bis 3, **dadurch gekennzeichnet, dass** die Oberflächenschicht eine Diffusionsschicht ist, wobei der Kupferanteil in der Diffusionsschicht ausschließlich durch Kupfer gebildet ist, welches aus dem Kupferemittenten in die Oberflächenschicht diffundiert ist.

5. Produkt nach einem der Ansprüche 1 bis 4 in Form eines Kupferrohres, welches an seiner Außen- und/oder Innenseite die Oberflächenschicht aufweist.

6. Produkt nach einem der Ansprüche 1 bis 4 in Form eines zumindest einseitig mit der Oberflächenschicht versehenen, bandförmigen Halbzeugs.

7. Produkt nach einem der Ansprüche 1 bis 6, **dadurch gekennzeichnet, dass** der Kupferemittent auf einem Träger angeordnet ist, welcher aus einem anderen Werkstoff als der Kupferemittent besteht.

8. Produkt nach einem der Ansprüche 1 bis 7, **dadurch gekennzeichnet, dass** als Kupferemittent eine zinnhaltige Kupferlegierung verwendet wird.

9. Produkt nach einem der Ansprüche 1 bis 8, **dadurch gekennzeichnet, dass** der Kupferemittent aus einem aus der folgenden Gruppe niedrig legierter Kupferlegierungen mit maximal 3 Gew.-% Legierungsbestandteilen oder maximal 8 Gew.-% Zinn ausgewählt ist:

P-haltiges oder P-desoxidiertes Kupfer mit bis zu 600 ppm P oder mehr, O-freies Kupfer, O-haltiges Kupfer, Sn-haltiges Kupfer nämlich CuSn0,2, CuSn1, CuSn2, CuSn3, CuSn4, CuSn5, CuSn6, CuSn8, Kupferwerkstoffe mit erhöhter Erweichungstemperatur nämlich CuAg0,1P, CuFe0,1P, CuFe2P, CuMg0,3, CuSn0,1MgP, CuZr, CuCrZr.

10. Verfahren zum Herstellen eines Produktes mit einer Oberflächenschicht aus einer antimikrobiellen, silberfarbenen Legierung auf Basis von Kupfer und Zinn, wobei das Produkt folgende Merkmale aufweist:

- Die Oberflächenschicht befindet sich auf einem Kupferemittenten, der aus Kupfer oder einer Kupfer-Legierung besteht, wobei Kupfer aus dem Kupferemittenten durch Diffusion in die Oberflächenschicht eingelagert ist;
- Die Oberflächenschicht auf Basis einer Kupfer-Zinn-Legierung weist wenigstens eine bei Raumtemperatur stabile intermetallische Phase aus Kupfer und Zinn auf;

wobei das Verfahren **dadurch gekennzeichnet ist, dass** ein den Kupferemittenten aufweisender oder bildender Träger verzinnt und anschließend der verzinnte Kupferemittent diffusionsgeglüht wird, wobei eine Zinndiffusionsschicht als Oberflächenschicht ausgebildet wird, welche an der dem Kupferemittenten abgewandten Oberfläche überwiegend oder vollständig aus einer einzigen oder aus zwei der folgenden intermetallischen Phasen besteht:

- ETA-Phase (Cu6Sn5) mit 40 Gew.-% Kupfer in dieser Phase
- EPSILON-Phase (Cu3Sn) mit 61 Gew.-% Kupfer in dieser Phase
- DELTA-Phase (Cu41Sn11) mit 67 Gew.-% Kupfer in dieser Phase wobei herstellungsbedingte Abweichungen der Kupfer-Konzentration an der Oberfläche in einem Bereich von maximal +/- 5 Gew.-% Kupfer liegen.

11. Verfahren nach Patentanspruchs 10, **dadurch gekennzeichnet, dass** zur Bildung der Oberflächenschicht Kupfer und Zinn galvanisch auf dem Kupferemittenten abgeschieden werden, und anschließend der Kupferemittent mit der Oberflächenschicht diffusionsgeglüht wird.

12. Verfahren nach Patentanspruch 10, **dadurch gekennzeichnet, dass** Kupfer und Zinn mittels physikalischer Gasphasenabscheidung (PVD) zu Bildung der Oberflächenschicht auf dem Kupferemittenten abgeschieden werden, und anschließend der Kupferemittent mit der Oberflächenschicht diffusionsgeglüht wird.

13. Verfahren nach einem der Anspruch 10 bis 12, **dadurch gekennzeichnet, dass** das Diffusionsglühen bei Temperaturen über 150 °C erfolgt.

14. Verfahren nach Anspruch 10 bis 13, **dadurch gekennzeichnet, dass** das Diffusionsglühen in einer sauerstofffreien Schutzgasatmosphäre erfolgt.

Europäisches Patentamt

European Patent Office

Office européen des brevets

# EUROPÄISCHER RECHERCHENBERICHT

Nummer der Anmeldung

EP 11 00 3805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 342418 A (INST NAT COLLEGES TECH JAPAN) 21. Dezember 2006 (2006-12-21) * das ganze Dokument * | 1,4,10, 13 | INV. C23C2/28 C23C2/08 C23C26/00 |
| X | FR 1 055 749 A (ONERA) 22. Februar 1954 (1954-02-22) * Beispiele 14-18 * | 1,4,10, 13 | C23C30/00 C22C9/02 C23C14/58 |
| X | LU MIN-HSIEN ET AL: "Sn - Cu intermetallic grain morphology related to Sn layer thickness", JOURNAL OF ELECTRONIC MATERIALS, WARRENDALE, PA, US, Bd. 36, Nr. 11, 1. November 2007 (2007-11-01), Seiten 1448-1454, XP008142685, ISSN: 0361-5235, DOI: 10.1007/S11664-007-0270-X [gefunden am 2007-09-20] * Seite 1448 - Seite 1454 * | 1,4,10, 13 | C25D3/30 C25D3/32 C25D3/60 C25D5/50 |
| X | DE 199 62 641 A1 (SCHMITT THOMAS KARLHEINZ G [DE]; DENDL PETER [DE]) 28. Juni 2001 (2001-06-28) * Spalte 5, Zeile 14 - Spalte 6, Zeile 18 * | 1,4,10, 13 | RECHERCHIERTE SACHGEBIETE (IPC) C23C C25D C22C |
| X | EP 1 784 064 A1 (FUJIKURA LTD [JP]) 9. Mai 2007 (2007-05-09) * das ganze Dokument * | 1-5,10, 13 | |

-/--

Der vorliegende Recherchenbericht wurde für alle Patentansprüche erstellt

| Recherchenort | Abschlußdatum der Recherche | Prüfer |
|---|---|---|
| Den Haag | 12. September 2011 | Elsen, Daniel |

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 11 00 3805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | M.A. KRISHTAL: "Fine structure of the diffusion zone and mechanical properties of copper coated with tin", METAL SCIENCE AND HEAT TREATMENT, Bd. 18, Nr. 1-2, 10. Februar 1976 (1976-02-10), Seiten 174-175, XP000002658696, Gefunden im Internet: URL:http://www.springerlink.com/content/m336817j0w137600/fulltext.pdf> [gefunden am 2011-09-09] * das ganze Dokument * ----- | 1,4,10, 13,14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 12. September 2011 | Elsen, Daniel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

.........................................................................................

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 11 00 3805

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-09-2011

| Im Recherchenbericht angeführtes Patentdokument | Datum der Veröffentlichung | Mitglied(er) der Patentfamilie | Datum der Veröffentlichung |
|---|---|---|---|
| JP 2006342418 A | 21-12-2006 | KEINE | |
| FR 1055749 A | 22-02-1954 | KEINE | |
| DE 19962641 A1 | 28-06-2001 | KEINE | |
| EP 1784064 A1 | 09-05-2007 | CN 1981565 A<br>HK 1104755 A1<br>WO 2006006534 A1<br>JP 4228234 B2<br>JP 2006045665 A<br>KR 20070028581 A<br>US 2007256856 A1 | 13-06-2007<br>22-10-2010<br>19-01-2006<br>25-02-2009<br>16-02-2006<br>12-03-2007<br>08-11-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BRAUN et al.** Spezielle Toxikologie für Chemiker. *Teubner Studienbücher Chemie*
- **U.LANDAU.** Die Keimreduzierende Wirkung des Silbers in Hygiene, Medizin und Wasseraufbereitung, Die Oligodynamie des Silbers. Isensee Verlag, 2006
- *Oligodynamie,* 02. Marz 2010, Wikipedia.org
- **U. LANDAU et al.** Antibakterielle Beschichtung zur Keimabtötung. *Galvanotechnik,* Dezember 2009, 2704 ff
- Antimicrobial Efficacy. CDA, 23. September 2009
- **WILKS ; MICHELS ; KEEVIL.** The Survival of Escheria coli 0157 on a range of metal surfaces. *International Journal of Food Microbiology,* 2005, vol. 105, 445-454
- Comparing Antimicrobial Efficacy of Copper and Silver for interior Touch Surface Applications. CDA, Oktober 2009